# EUROPÄISCHE PATENTSCHRIFT

(11) **EP 4 028 212 B1**
(45) Veröffentlichungstag und Bekanntmachung des Hinweises auf die Patenterteilung: **01.05.2024**
(21) Anmeldenummer: 20775589.3
(22) Anmeldetag: 11.09.2020
(51) Int. Cl.: B23Q 5/06, B23Q 17/10

(54) **ANGETRIEBENER WERKZEUGHALTER MIT MINDESTENS EINER TURBINE**
DRIVEN TOOL HOLDER HAVING AT LEAST ONE TURBINE
PORTE-OUTIL ENTRAÎNÉ COMPORTANT AU MOINS UNE TURBINE

(30) Priorität: 13.09.2019 DE 102019124761
(43) Veröffentlichungstag der Anmeldung: 20.07.2022
(73) Patentinhaber: WTO Vermögensverwaltung GmbH, 77797 Ohlsbach (DE)
(72) Erfinder: JANSEN, Karlheinz, 77746 Schutterwald (DE); MAIER, Klaus, 77799 Ortenberg (DE); BOOKS, Baruch, 251470 KFAR VRADIM (IL); SCHWEITZER, Aviatar, 30300 ATLIT (IL); OZ, Yitzhak, 25127 TAL-EL (IL)
(74) Vertreter: DREISS Patentanwälte PartG mbB
(86) Internationale Anmeldenummer: PCT/EP2020/075558
(87) Internationale Veröffentlichungsnummer: WO 2021/048414

(56) Entgegenhaltungen:
- EP-A2- 0 065 293
- WO-A1-02/051584
- DE-U1- 9 111 925
- GB-A- 770 375
- JP-A- S63 300 862
- US-A- 3 101 014
- US-A- 3 305 214

## Beschreibung

Die Erfindung betrifft einen angetriebenen Werkzeughalter, dessen Spindel mittels einer Freistrahlturbine in Drehung versetzt wird. Die Freistrahlturbine kann durch ein flüssiges oder gasförmiges Fluid (zum Beispiel Kühlschmiermittel oder Luft) oder ein Zwei-Phasen-Gemisch angetrieben werden.

### Stand der Technik

Aus der DE 10 2009 012 805 A1, der EP 3 043 957 B1, der EP 2 623 258 B1 und der DE 10 2016 212 896 B4 ist es bekannt, eine Freistrahlturbine als Antrieb für die Spindel eines Werkzeughalters einzusetzen.

Aus der DE 100 41 854 A1 ist ein Spindelkopf bekannt, dessen Spindel mit Druckluft angetrieben wird. Zur Regelung der Drehzahl der Spindel ist ein Proportionalventil vorgesehen. Um bei Bedarf die Drehzahl der Spindel zu reduzieren, wird ein Teil des Überdrucks in dem Proportionalventil abgebaut.

Ein Proportionalventil ist ein (Stetig-)Ventil, das nicht nur einige wenige diskrete Schaltstellungen zulässt, sondern einen stetigen Übergang der Ventilöffnung bzw. der Schaltstellung erlaubt. Stromventile beeinflussen den Volumenstrom [cm³/s] eines Fluids. Proportionalventile mit einem Eingang und einem Ausgang werden auch als Stromventile bezeichnet. Es gibt auch Proportionalventile mit mehr als zwei Arbeitsanschlüssen.

Aus der JP 2006 102 835 A ist eine Spindeleinheit bekannt, die zwei Laufräder aufweist. Die Laufräder sind an eine gemeinsame Druckluftversorgung angeschlossen. Eine ähnliche Anordnung ist aus der US 3 055 12 bekannt, die einen ebenfalls mit Druckluft betriebenen Zahnarztbohrer beschreibt.

Aus der US 3 305 214 ist eine ebenfalls mit Druckluft betriebene Differentialturbine bekannt, die zwei gegenläufig auf einer Welle rotierende Turbinenräder aufweist. Das von den Turbinenrädern an die Turbinenwelle mittels eines reibschlüssigen Koppelgetriebes übertragene Drehmoment hängt von der Differenz der Drehzahlen beider Turbinenräder ab.

Aus der WO 02/051584 A1 ist ein angetriebener Werkzeughalter bekannt, an dessen Spindel ein Turbinenlaufrad angeordnet ist. Auf das Laufrad sind zwei Düsenanordnungen gerichtet, die über zwei Zuleitung mit Druckluft versorgt werden. Der Volumenstrom durch und der Druck in den Zuleitungen werden über ein gemeinsames Stromventil gesteuert.

Ein ähnlicher Aufbau ist aus der US 3 101 014 bekannt, die ei mit Druckluft betriebenes Handwerkzeug beschreibt.

Die Spindel eines Werkzeughalters hat eine Werkzeugaufnahme für ein Werkzeug. Bei kleinen Werkzeugdurchmessern sind sehr hohe Drehzahlen erforderlich, um eine wirtschaftliche und qualitativ hochwertige Bearbeitung durchführen zu können.

Freistrahlturbinen umfassen ein rotierendes Laufrad und eine oder mehrere feststehende Düsen. Aus der oder den Düsen tritt das Fluid mit hoher Geschwindigkeit aus. Das Fluid trifft auf dem Laufrad auf und versetzt dieses und mit ihr die Spindel in Drehung.

In der oder den Düsen wird die Druckenergie des Fluids in kinetische Energie umgewandelt. Die Druckdifferenz des Fluids vor und nach der Düse bestimmt die maximal erreichbare Geschwindigkeit des Fluidstrahls. Das Produkt aus der Geschwindigkeit des Fluids und dem Querschnitt des aus der Düse austretenden Fluidstrahls bestimmt die zur Verfügung stehende Leistung des Fluids. In Abhängigkeit des Laufraddurchmessers ergeben sich daraus die Drehzahl und das Drehmoment der Turbine.

Die aus der Stromerzeugung bekannten Freistrahlturbinen (in der Regel handelt es sich um Pelton-Turbinen) arbeiten bei einer durch die Netzfrequenz vorgegebenen konstanten Drehzahl. Die Geschwindigkeit des aus den Düsen austretenden Wassers ist wegen des konstanten Gefälles ebenfalls konstant und der Durchfluss wird von dem Wasserangebot vorgegeben.

Das Anforderungsprofil an Kleinstturbinen zum Antrieb eines Werkzeugs unterscheidet sich davon ganz wesentlich. Unterschiedliche Werkstoffe (z.B. Stahl oder Aluminium) oder unterschiedliche Durchmesser der eingesetzten Werkzeuge (z.B. Fräser oder Bohrer mit Durchmesser 1 mm oder 3 mm) erfordern für eine effektive Bearbeitung eine Anpassung der Drehzahl und des zur Verfügung stehenden Drehmoments.

Bei den bekannten Lösungen können - wegen der nicht veränderbaren Düsenquerschnitte - die Leistung und die Drehzahl der Turbine ausschließlich über die Druckdifferenz an der Düse und somit der Strahlgeschwindigkeit des Fluids eingestellt werden.

Wenn solche mit Fluid angetriebenen Werkzeughalter mit Kühlschmiermittel als Arbeits-Fluid beaufschlagt werden, wird die an der Werkzeugmaschine vorhandene KühlSchmiermittel-Pumpe "zweckentfremdet". Diese für einen anderen Zweck (Förderung von Kühlschmiermittel zu den Werkzeugscheiden) vorgesehenen Pumpen erlauben oftmals keine beliebige Anpassung des Förderdrucks und des Volumenstroms. Je nach Kennlinie der maschinenseitigen Pumpe kann darüber hinaus der Druck bei größeren Volumenströmen stark abfallen und den Einstellbereich weiter begrenzen.

Um dem entgegen zu wirken, bieten die Hersteller solcher Werkzeughalter eine Vielzahl von unterschiedlichen Werkzeughaltern an, deren Turbine je nach Turbinendurchmesser, Turbinenausführung und Düsenanordnung für bestimmte Drehzahlbereiche und Drehmomentbereiche optimiert wurde. Wenn der relativ enge Arbeitsbereich eines vorhandenen angetriebenen Werkzeughalters für die Bearbeitung eines bestimmten Werkstücks nicht geeignet ist, muss der Anwender einen weiteren Werkzeughalter beschaffen, dessen Turbine einen für die gewünschte Aufgabe geeigneten Arbeitsbereich hat. Die Investitionskosten steigen mehr oder weniger linear mit der Zahl der Werkzeughalter. Außerdem ist eine Optimierung oder Änderung des Arbeitsbereichs des Werkzeughalters während der Bearbeitung nicht möglich, da immer der komplette Werkzeughalter mit dem Werkzeug ausgetauscht werden muss, um die Drehzahl oder das Drehmoment der Spindel zu verändern.

### Aufgabe

Der Erfindung liegt die Aufgabe zugrunde, einen Werkzeughalter bereitzustellen, der die Nachteile des Standes der Technik überwindet. Insbesondere soll ein flexibel an verschiedene Werkstoffe und Werkzeuge adaptierbarer Werkzeughalter mit einem weiten Einsatzbereich bereitgestellt werden.

Diese Aufgabe wird bei einem angetriebenen Werkzeughalter nach dem Oberbegriff des Anspruchs 1 mit den kennzeichnenden Merkmalen des Anspruchs 1 sowie durch einen angetriebenen Werkzeughalter nach dem Oberbegriff des Anspruchs 2 mit den kennzeichnenden Merkmalen des Anspruchs 2 gelöst.

Eine erfindungsgemäße Düsenanordnung umfasst eine oder mehrere gleichgerichtete Düsen. Durch Betätigen des erfindungsgemäßen Wege-Ventils oder der erfindungsgemäßen Wege-Ventile können die Düsenanordnungen eines Werkzeughalters einzeln oder gemeinsam mit dem unter Druck stehenden Arbeitsfluid beaufschlagt werden. Dadurch wird der Arbeitsbereich der Freistrahlturbine stark vergrößert. Beispielsweise kann das Drehmoment der erfindungsgemäßen Freistrahlturbine durch Zuschalten einer zweiten baugleichen Düsenanordnung verdoppelt werden, wenn beide Düsenanordnungen gleichsinnig auf das Laufrad gerichtet sind. Durch eine unterschiedliche Auslegung der Düsenanordnung, z. B durch die Änderungen der Zahl der Düsen und/oder durch Änderung der Austrittsflächen der Düsen kann die Leistung der Freistrahlturbine in einem noch weiteren Bereich bei gleichen hydraulischen Randbedingungen gesteuert werden.

Anders als im Stand der Technik, arbeitet die Erfindung mit Wege-Ventilen mit deren Hilfe die Versorgung einer oder mehrerer Düsenanordnungen mit unter Druck stehendem Fluid gesteuert wird. Aus Gründen der sprachlichen Vereinfachung ist im Zusammenhang mit der Erfindung manchmal nur von einem "Ventil" die Rede; gemeint ist stets ein "Wege-Ventil". In Folge dessen kann der Volumenstrom des auf ein oder mehrere Laufräder wirkenden Fluids gesteuert bzw. variiert werden. Dadurch werden Drehzahl und Drehmoment der Spindel des Werkzeughalters auf verlustarme und energieeffiziente Weise gesteuert. Die erfindungsgemäße Steuerung von Drehzahl und Drehmoment der Spindel ist ausreichend genau und benötigt nur wenig Bauraum.

Wenn zum Beispiel die von einer zweiten Zuleitung bereitgestellte hydraulische Leistung doppelt so groß ist wie die von einer ersten Zuleitung bereitgestellte hydraulische Leistung, kann die Leistung in drei Stufen durch Umschalten zwischen der ersten und zweiten Zuleitung oder die gleichzeitige Beaufschlagung beider Zuleitungen in einem sehr weiten Bereich bei gleichem Druck des Fluids variiert werden:
- Volle Leistung durch gleichzeitiges Beaufschlagen beider Turbinen.
- 2/3 der vollen Leistung durch Beaufschlagen nur der zweiten Turbine.
- 1/3 der vollen Leistung durch Beaufschlagen nur der ersten Turbine.

Das an der Spindel bzw. der Werkzeugaufnahme nutzbare Drehmoment wird durch Zu- oder Abschalten (Verschließen oder Öffnen) von Zuleitungen gesteuert. Dabei können die Zuleitungen bzw. die daran anschließenden Düsenanordnungen auf ein Laufrad oder verschiedene Laufräder der Spindel gerichtet sein.

Durch Änderungen des Fluid-Drucks kann der Arbeitsbereich noch weiter vergrößert werden.

Das bedeutet, dass ein und derselbe Werkzeughalter für verschiedenste Bearbeitungen eingesetzt werden kann. Das erforderliche Drehmoment kann auf einfache Weise durch Betätigen eines Wege-Ventils gesteuert werden.

In vorteilhafter Ausgestaltung der Erfindung treibt das aus den mindestens zwei Zuleitungen bzw. Düsenanordnungen austretende Fluid die Spindel in entgegengesetzte Drehrichtungen an. Zur Umkehr der Drehrichtung muss lediglich das Wegeventil einmal betätigt werden. Die Umkehr der Drehrichtung kann bei erfindungsgemäßen Werkzeughaltern mit nur einem Laufrad realisiert werden. Das ist besonders kostengünstig und verursacht kaum zusätzlichen Bauraumbedarf, so dass der Werkzeughalter sehr kompakt baut. Es ist aber auch möglich, für jede Drehrichtung und jede Drehzahl ein Laufrad oder mehrere Laufräder vorzusehen.

Der Arbeitsbereich des erfindungsgemäßen Werkzeughalters kann noch weiter vergrößert werden, wenn die Freistrahlturbine zwei oder mehr an der Spindel angeordnete Laufräder aufweist und jedem Laufrad mindestens eine Zuleitung zugeordnet ist. Durch unterschiedliche Laufraddurchmesser können die Drehzahl und das Drehmoment der Freistrahlturbine optimal auf den zu bearbeitenden Werkstoff, den Bearbeitungsvorgang (Schruppen/Schlichten) und den Durchmesser des Werkzeugs eingestellt werden.

In vielen Fällen ist es vorteilhaft, wenn zwei oder drei Laufräder mit zugehörigen Zuleitungen in einen Werkzeughalter integriert sind. Das bedeutet, dass mehrere Freistrahlturbinen zur Verfügung stehen, die jeweils für einen Arbeitsbereich optimiert sind. Diese Optimierung erfolgt zum Beispiel, indem die Hauptabmessungen der Turbine (u. a. Laufraddurchmesser und Breite der Schaufeln des Laufrads) und das Design des Laufrads sowie Anzahl und Auslegung bzw. Abmessungen der Düsen optimal aufeinander abgestimmt werden. Die Turbinen können einzeln oder gemeinsam betrieben werden. Auch dazu muss lediglich ein Wegeventil betätigt werden.

Damit der erfindungsgemäße Werkzeughalter im Bereich der Werkzeugaufnahme möglichst kompakt baut, kann mindestens eines der Laufräder an einem zweiten Ende der Spindel angeordnet sein. Das zweite Ende liegt dem ersten Ende der Spindel mit der Werkzeugaufnahme gegenüber. Erfindungsgemäß ist auch vorgesehen, dass an erstem und zweitem Ende der Spindel mindestens ein Laufrad angeordnet ist. Dadurch ergeben sich weitere Freiheitsgrade bei der Gestaltung des Werkzeughalters.

Die Spindel des Werkzeughalters ist in einem Gehäuse des Werkzeughalters drehbar gelagert und die Laufräder sind bevorzugt an den über die Lagerung hinausragenden Enden der Spindel angeordnet. Das erleichtert die Montage und die Abdichtung der Lagerung gegen das Arbeitsfluid der Turbinen.

Allgemein gilt für alle erfindungsgemäßen Werkzeughalter, dass die Betätigung der Wegeventile manuell, elektrisch, mechanisch, hydraulisch oder pneumatisch erfolgen kann. Bestimmte Schaltstellungen des oder der Wege-Ventile sind wiederholbar und automatisierbar. Daher kann der Anwender, eine gut geeignete Einstellung (Werkzeug, zu bearbeitender Werkstoff, Schaltstellung des/der Wegeventile und Förderleistung der Pumpe) bei Bedarf immer wieder aufrufen, ohne sie wieder aufwändig einstellen und prüfen zu müssen.

Ein weiterer Vorteil des erfindungsgemäßen Werkzeughalters ist darin zu sehen, dass er sehr flexibel an verschiedenen Werkzeugmaschinen einsetzbar ist. Wenn der Werkzeughalter zum Beispiel auf einer Werkzeugmaschine eingesetzt wird, deren Pumpe für das Kühlschmiermittel nur einen kleinen Förderstrom bereitstellt, wird nur eine Düsenanordnung aktiviert. Während beim Einsatz auf einer Werkzeugmaschine mit einer leistungsfähigeren Pumpe zwei oder mehr Düsenanordnungen aktiv sein können.

Das oder die Wegeventile können je nach Ausführung verschiedenste Kombinationen aus zugeschalteten Düsenanordnungen und Laufrädern ermöglichen.

Rüstet man den Werkzeughalter und die Maschine, auf der dieser zum Einsatz kommt, mit einem automatischen Werkzeugwechselsystem aus, können unterschiedliche Schneidwerkzeuge eingewechselt und dann mit der dazu passenden und selektierten Turbine betrieben werden.

Eine Düsenanordnung kann eine oder mehrere, in der Regel baugleiche Düsen umfassen.

Es ist möglich, das von der Pumpe geförderte Fluid auf eine, zwei oder mehr Düsenanordnungen (Parallelschaltung) zu verteilen. Schon dadurch können die Drehzahl und das an der Spindel verfügbare Drehmoment in weiten Grenzen gesteuert werden.

Eine weitere Variation der Drehzahl und des an der Spindel verfügbaren Drehmoments wird erfindungsgemäß dadurch erreicht, dass an der Spindel zwei oder mehr Laufräder mit verschiedenen Durchmessern angeordnet sind. Je nachdem, welches der Laufräder mit Fluid beaufschlagt wird, ändern sich die Drehzahl und das an der Spindel verfügbare Drehmoment.

Beide erfindungsgemäßen Steuerungsmöglichkeiten (Zu- und Abschalten verschiedener Düsenanordnungen sowie Beaufschlagen verschiedener Laufräder mit Fluid) können bei einem Werkzeughalter verwirklicht werden und wirken kumulativ. Dadurch können Drehzahl und Drehmoment ein und desselben Werkzeughalters in sehr weiten Grenzen gesteuert werden.

In einer bevorzugten Ausführungsform des erfindungsgemäßen Wege-Ventils umfasst dieses einen ringförmigen Stellring und eine mit dem Stellring zusammenwirkende kreisringförmige oder kegelstumpfförmige Dichtfläche in dem Gehäuse. Die Zuleitungen, welche die Düsenanordnungen mit unter Druck stehendem Fluid versorgen, gehen über einen Mittelpunktswinkel α verteilt am Umfang der Dichtfläche ab. Je nach der Drehstellung des Stellrings relativ zu dem Gehäuse verschließt der Stellring eine oder mehrere der Zuleitungen bzw. gibt sie frei. Je mehr Zuleitungen offen sind, desto mehr Fluid strömt in Summe durch die Zuleitungen auf das oder die Laufräder. Durch Verdrehen des Stellrings relativ zu dem Gehäuse ändert sich die Zahl der mit unter Druck stehendem Fluid versorgten Düsenanordnungen und infolgedessen auch das Drehmoment, welches das oder die mit dem Fluid beaufschlagten Laufräder an der Spindel übertragen und das dann an der Werkzeugaufnahme zur spanenden Bearbeitung zur Verfügung steht.

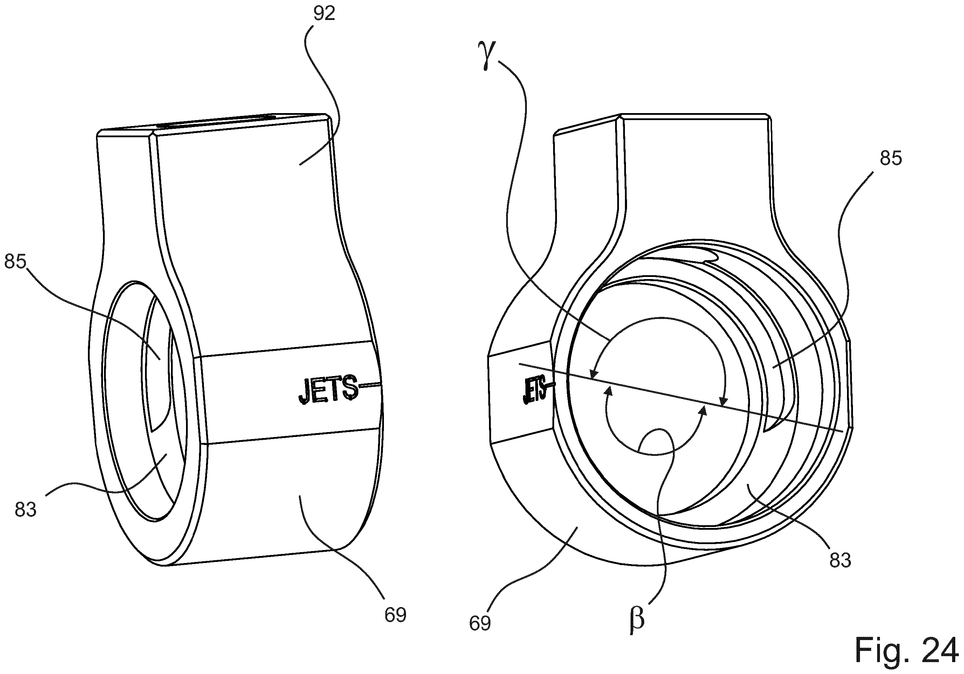

Zu diesem Zweck weist in einer besonders vorteilhaften Ausgestaltung der Stellring eine zu der Dichtfläche des Gehäuses komplementäre Gegenfläche auf, die wiederum als Kreisring oder Kegelstumpf mit einem Mittelpunktswinkel γ (siehe Figur 24) ausgeführt ist. Der Mittelpunktswinkel γ ist kleiner als 360°. In der Regel beträgt er weniger als 200° und mehr als 135°. An dem verbleibenden Umfangswinkel β (β = 360° - γ) des Stellrings ist eine Ausnehmung ausgebildet. Dies bedeutet, dass abhängig von der Drehstellung des Stellrings relativ zu dem Gehäuse entweder die Gegenfläche des Stellrings eine oder mehrere der Zuleitungen, die von der Dichtfläche in dem Gehäuse abgehen, öffnen oder verschließen. Dort wo keine Gegenfläche, sondern die Ausnehmung vorhanden ist, begrenzen das Gehäuse und der Stellring eine Fluidkammer. Diese Fluidkammer versorgt die nicht von der Gegenfläche des Stellrings verschlossenen Zuleitungen mit Fluid. Die

Fluidkammer selbst wird über eine Versorgungsbohrung, bevorzugt aber mehrere Versorgungsbohrungen mit unter Druck stehendem Fluid versorgt.

Damit unabhängig von der Drehposition des Stellrings relativ zu dem Gehäuse die mit dem Stellring "mitwandernde" Fluidkammer immer mit unter Druck stehendem Fluid versorgt werden kann, empfiehlt es sich, fünf oder sechs Versorgungsbohrungen in dem Gehäuse vorzusehen, die ausgehend von einer zentralen Zuleitung die Dichtfläche in dem Gehäuse zumindest teilweise schneiden bzw. durchdringen.

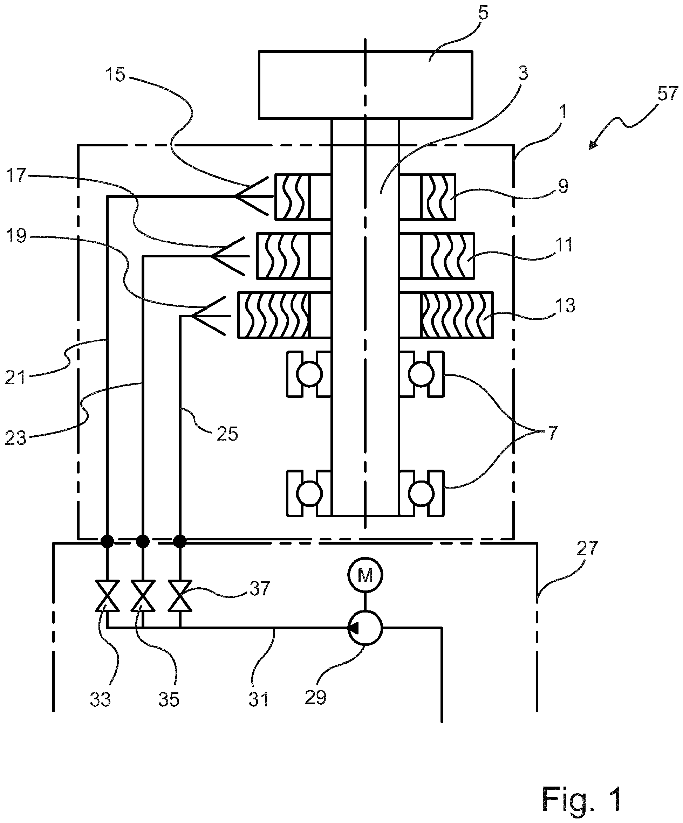

Bei dem erfindungsgemäßen Werkzeughalter sind zwei Konzepte der Aufnahme des Werkzeugs in der Integration von Spindel und Werkzeug möglich. Entweder umfasst die Spindel eine Werkzeugaufnahme in der das Werkzeug gespannt wird. Dafür stehen alle aus dem Stand der Technik bekannten Werkzeugaufnahmen zur Verfügung. Dieses Konzept ist zeichnerisch zum Beispiel in den Figuren 1 bis 13 dargestellt.

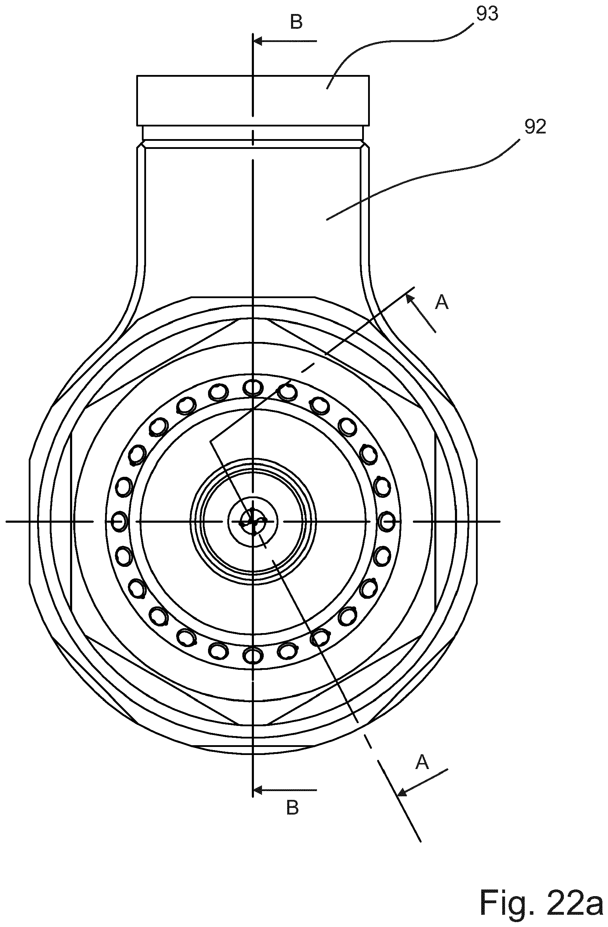

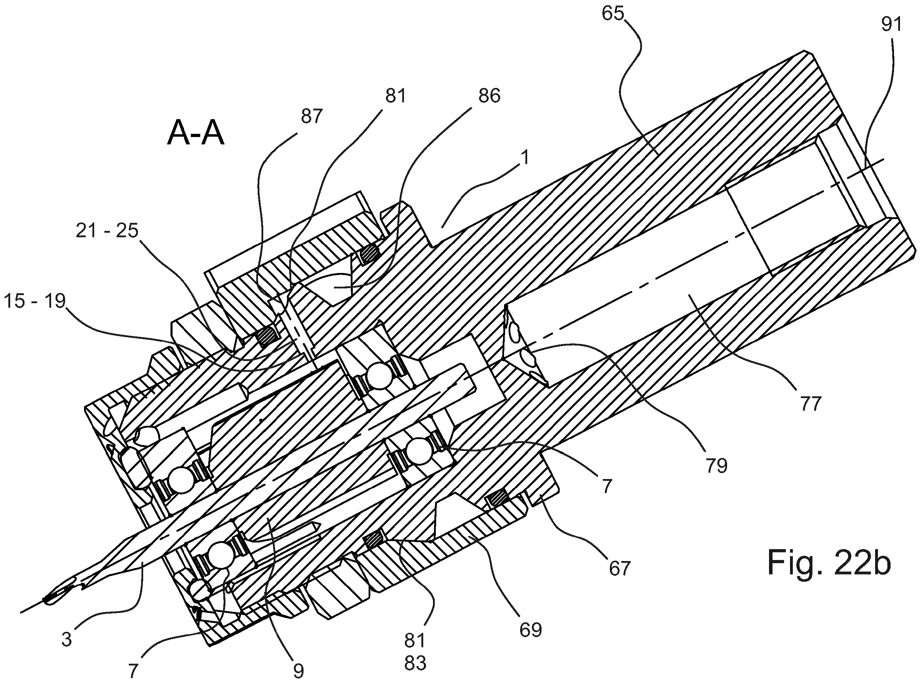

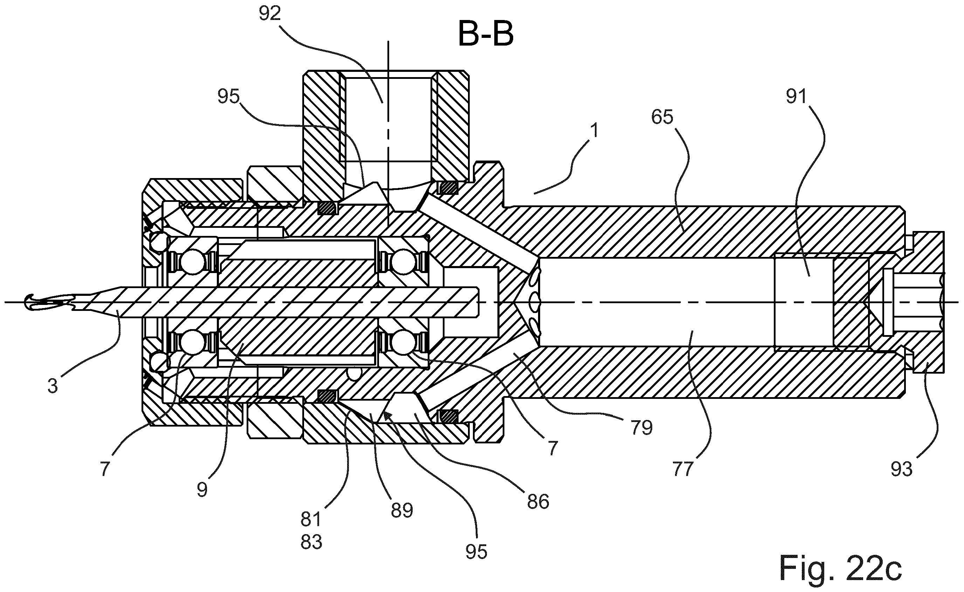

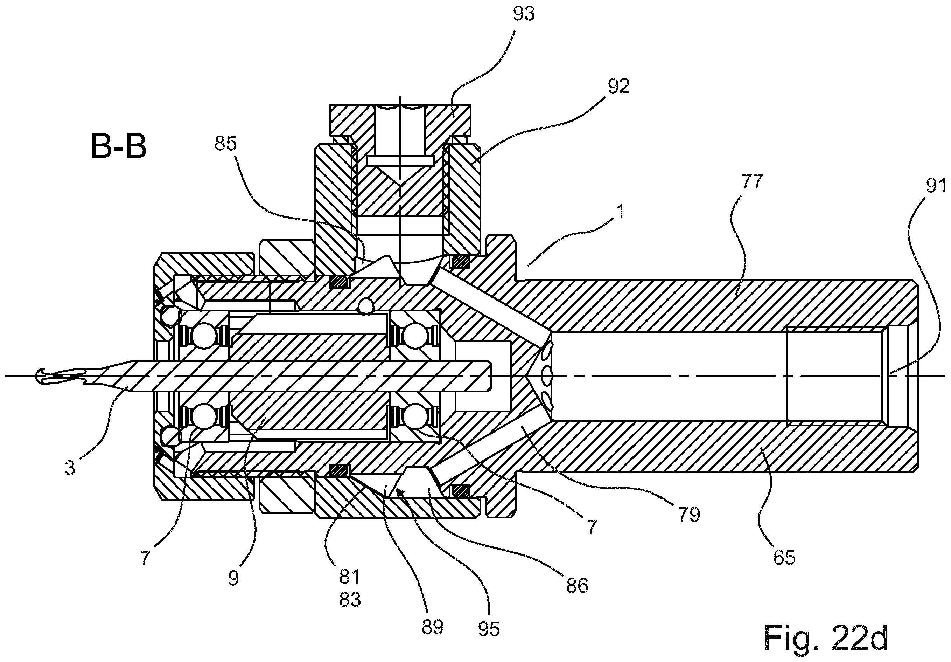

Oder das Werkzeug wird in die Spindel integriert. Diese Integration erlaubt eine weitere Miniaturisierung und führt zu einem geringen Rotationsträgheitsmoment der rotierenden Bauteile (Laufräder, Spindel, Werkzeug). Dieses Konzept ist zeichnerisch zum Beispiel in den Figuren 22 b, c und d sowie 25 bis 27 dargestellt.

Weitere Vorteile und vorteilhafte Ausgestaltungen der Erfindung sind den Zeichnungen, deren Beschreibung und den Patentansprüchen entnehmbar.

### Zeichnungen

Es zeigen:
Figuren 1 bis 18 schematische Darstellungen verschiedener Ausführungsformen erfindungsgemäßer Werkzeughalter;
Figur 19 ein erfindungsgemäßes Laufrad mit zwei Drehrichtungen
Figur 20 ein Schnitt durch einen erfindungsgemäßen Werkzeughalter sowie
Figur 21,
Figuren 22a, 22b, 22c und 22d und

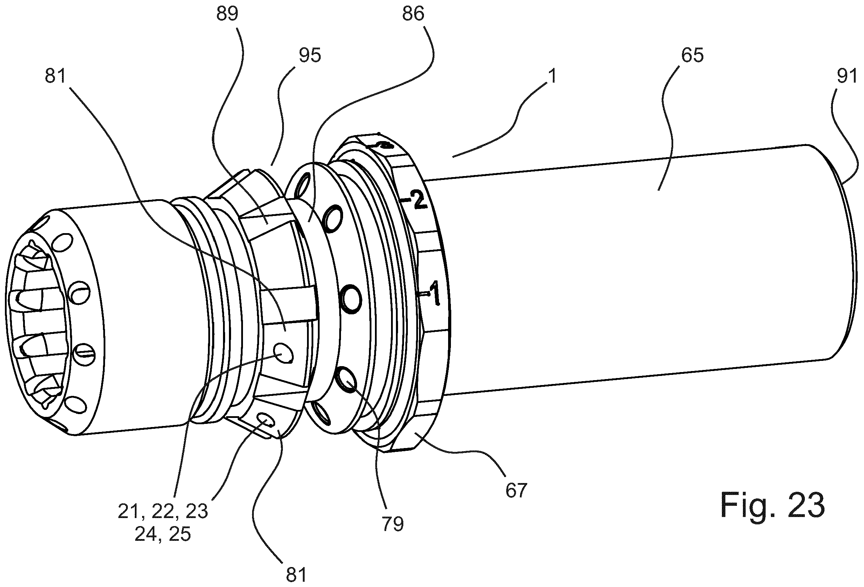

Figuren 23 bis 27 Darstellungen weiterer Ausführungsformen erfindungsgemäßer Werkzeughalter.

### Beschreibung der Ausführungsbeispiele

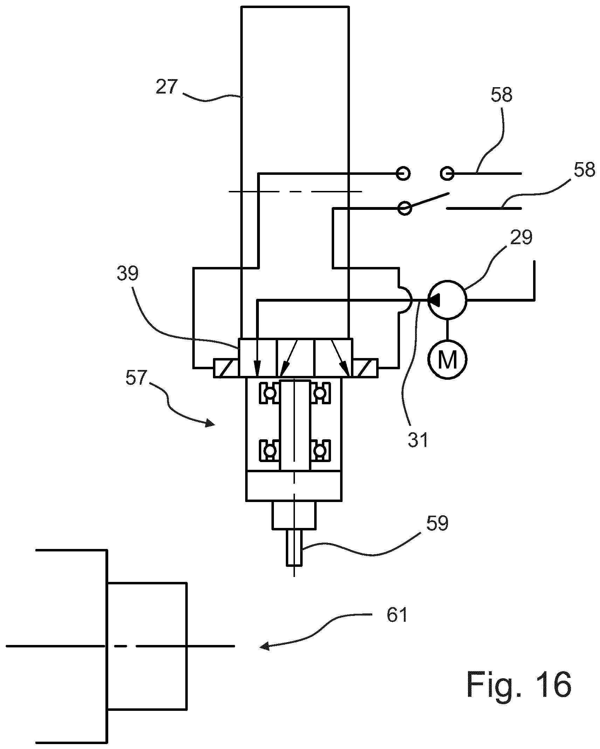

In den Figuren 1 bis 18 sind verschiedene Ausführungsformen erfindungsgemäßer Werkzeughalter schematisch und stark vereinfacht dargestellt, um das Prinzip der Erfindung zu verdeutlichen. In allen Zeichnungen werden für die gleichen Bauteile die gleichen Bezugszeichen verwendet und es gilt das bezüglich eines Ausführungsbeispiels Gesagte für die anderen Ausführungsbeispiele entsprechend. Der dargestellte Werkzeughalter ist in den Figuren immer als "gerader" Werkzeughalter dargestellt. Selbstverständlich kann die Spindel 3 zur Aufnahme an der Werkzeugmaschine jedoch jede beliebige Raumlage (Winkel, Versatz etc.) einnehmen.

Der Werkzeughalter kann auf allen Arten von Werkzeugmaschinen (Fräszentren, Drehzentren, Multi-Task-Zentren usw.) zum Einsatz kommen und über alle nach dem Stand der Technik möglichen Werkzeugaufnahmen (z.B. Steilkegel, HSK, Coromant Capto, Zylinderschaft usw.) an die Werkzeugmaschine angebaut werden.

In der Figur 1 ist ein angetriebener Werkzeughalter 57 dargestellt, der ein Gehäuse 1 und eine in dem Gehäuse 1 drehbar gelagerte Spindel 3 aufweist. An einem ersten Ende der Spindel 3 ist eine Werkzeugaufnahme 5 schematisch dargestellt. In diese Werkzeugaufnahme 5 wird ein für die Bearbeitung geeignetes Werkzeug (zum Beispiel ein Fingerfräser oder ein Bohrer) eingespannt. Die Werkzeugaufnahme 5 kann eine Spannzangenaufnahme oder ein anderes aus dem Stand der Technik bekanntes Spannsystem sein.

Die Lagerung der Spindel 3 in dem Gehäuse 1 ist durch zwei (Wälz-)Lager 7 angedeutet.

Bei diesem Ausführungsbeispiel sind an der Spindel 3 insgesamt drei Laufräder 9, 11 und 13 angeordnet. Die Laufräder 9, 11 und 13 sind fest und unlösbar oder lösbar mit der Spindel verbunden (Z. B. mittels Presssitz, Löten oder Schweißen) oder einstückig mit der Spindel 3 ausgebildet. Jedes dieser Laufräder 9, 11 und 13 hat einen anderen Durchmesser. Die Laufräder 9, 11, 13 können auch einstückig sein und dann als Einheit mit der Spindel 3 verbunden werden. Es ist auch möglich Laufräder 9, 11, 13 und Spindel 3 aus einem Stück zu fertigen.

Bei diesem Ausführungsbeispiel ist jedem Laufrad 9, 11 und 13 eine Düsenanordnung 15, 17 und 19 zugeordnet. Die Düsenanordnungen 15, 17 und 19 werden über jeweils eine Zuleitung 21, 23 und 25 mit Fluid beaufschlagt.

Der erfindungsgemäße angetriebene Werkzeughalter 57 ist mit seinem Gehäuse 1 an beispielsweise einem Revolver 27 einer Werkzeugmaschine befestigt. Die Werkzeugmaschine umfasst eine Pumpe 29 mit der Kühlschmiermittel oder ein anderes Fluid gefördert werden kann. Die Pumpe 29 wird in der Regel durch einen Elektro-Motor M angetrieben. Die Zuleitungen 21, 23 und 25 sind mit einer Förderseite 31 der Pumpe 29 hydraulisch verbunden.

Zwischen der Förderseite 31 und den Zuleitungen 21, 23 und 25 sind z.B. Wege-Ventile 33, 35 und 37 oder ein Wege-Ventil (nicht dargestellt) mit mehreren Arbeitsanschlüssen zwischengeschaltet. Jedes der dargestellten Wege-Ventile 33, 35 und 37 kann einzeln geschaltet werden. Wenn beispielsweise die Wege-Ventile 35 und 37 geschlossen sind und nur das Wege-Ventil 33 geöffnet ist, wird die Düsenanordnung 15 mit dem von der Pumpe 29 geförderten Fluid versorgt. Das aus der Düsenanordnung 15 austretende Fluid treibt das Laufrad 9 an.

Wenn beispielsweise die Wege-Ventile 33 und 37 geschlossen sind und nur das Wege-Ventil 35 geöffnet ist, wird die Düsenanordnung 17 mit dem von der Pumpe 29 geförderten Fluid versorgt. Das aus der Düsenanordnung 17 austretende Fluid treibt das Laufrad 11 an. Weil mindestens die Laufräder 9, 11 und 13 verschieden ausgelegt sind, ergeben sich je nachdem welche der Düsenanordnungen 15, 17 und/oder 19 mit Fluid von der Pumpe 29 versorgt wird, eine andere Betriebsdrehzahl der Spindel 3.

Wenn die verschiedenen Düsenanordnungen auf ein und dasselbe Laufrad gerichtet sind, kann über das Zu- und Abschalten einzelner Zuleitungen das an der Spindel verfügbare Drehmoment gesteuert werden.

Bei den in den Figuren 1, 2 und 3 dargestellten Ausführungsbeispielen sind die Wege-Ventile 33, 35 und (sofern vorhanden) 37 Teil der Werkzeugmaschine und nicht des Werkzeughalters. Das bedingt mehrere Fluidschnittstellen (oftmals eine Fluidschnittstelle für jede Düsenanordnung 15, 17, 19) zwischen Werkzeugmaschine und Werkzeughalter. Sie sind in den Figuren durch schwarze Punkte angedeutet. Das Zu- oder Abschalten der Düsenanordnungen 15, 17, 19 ist bei diesem Ausführungsbeispiel sehr einfach, da alle Steuer- und Schaltelemente (zum Beispiel die Wege-Ventile 33, 35, und 37) auf der Maschinenseite angeordnet sind. Dieser Aufbau erfordert jedoch für jede Düsenanordnung 15, 17, 19 eine Fluidschnittstelle an der Verbindung zwischen der Werkzeugmaschine und dem Werkzeughalter 57. Anders ausgedrückt: Der Werkzeughalter hat dann drei Fluidanschlüsse.

Die Wege-Ventile 33, 35 und 37 können unabhängig voneinander geschaltet werden. Durch die Schaltung der Wege-Ventile 33, 35, 37 kann das von der Pumpe 29 geförderte Fluid auf ein oder mehrere der Laufräder 9, 11, 13 verteilt werden. Dadurch können Drehzahl und Drehmoment, welche an der Spindel 3 zur Verfügung stehen, in sehr weiten Grenzen gesteuert werden und an die Anforderungen verschiedener Zerspanungsaufgaben angepasst werden.

Beispielsweise wird ausschließlich die Düsenanordnung 15 mit dem von der Pumpe 29 geförderten Fluid versorgt, wenn die (Wege-)Ventile 35 und 37 geschlossen sind und nur das Wege-Ventil 33 geöffnet ist. Die Düsenanordnung 15 beaufschlagt das Laufrad 9 mit dem Fluid. Von den drei Laufrädern 9, 11, 13 hat das Laufrad 9 den kleinsten Durchmesser. Daher ist - gleiche Auslegung der Düsenanordnungen 15, 17 und 19 vorausgesetzt - die Drehzahl der Spindel 3 am höchsten, wenn das Wege-Ventil 33 geöffnet ist und das Laufrad 9 mit Fluid beaufschlagt wird.

Wenn für eine andere Zerspanungsaufgabe ein höheres Drehmoment erforderlich ist, kann zum Beispiel das (Wege-)Ventil 37 geöffnet werden und die Wege-Ventile 33 und 35 geschlossen werden.

Dann wird das Laufrad 13 mit dem größten Durchmesser mit dem aus der Düsenanordnung 19 austretenden Fluid beaufschlagt. In dieser Schaltstellung ist die Arbeitsdrehzahl der Spindel 3 am niedrigsten, jedoch ist das zur Verfügung stehende Drehmoment am größten.

Wenn nur das Wegeventil 35 geöffnet ist, dann wird das mittlere Laufrad 11 mit Fluid beaufschlagt und es ergibt sich eine mittlere Arbeitsdrehzahl bei mittlerem Drehmoment.

Darüber hinaus kann die Förderleistung der Pumpe 29 variiert werden.

Es sind beliebige andere Kombinationen von Schaltstellungen der Wege-Ventile 33, 35, 37 möglich, um die Drehzahl und das an der Spindel 3 verfügbare Drehmoment einzustellen. Es können auch zwei oder mehre Laufräder gleichzeitig mit Fluid beaufschlagt werden. Natürlich können die Drehzahl und das an der Spindel 3 verfügbare Drehmoment zusätzlich noch über den Druck auf der Förderseite 31 bzw. die Förderleistung der Pumpe 29 gesteuert werden.

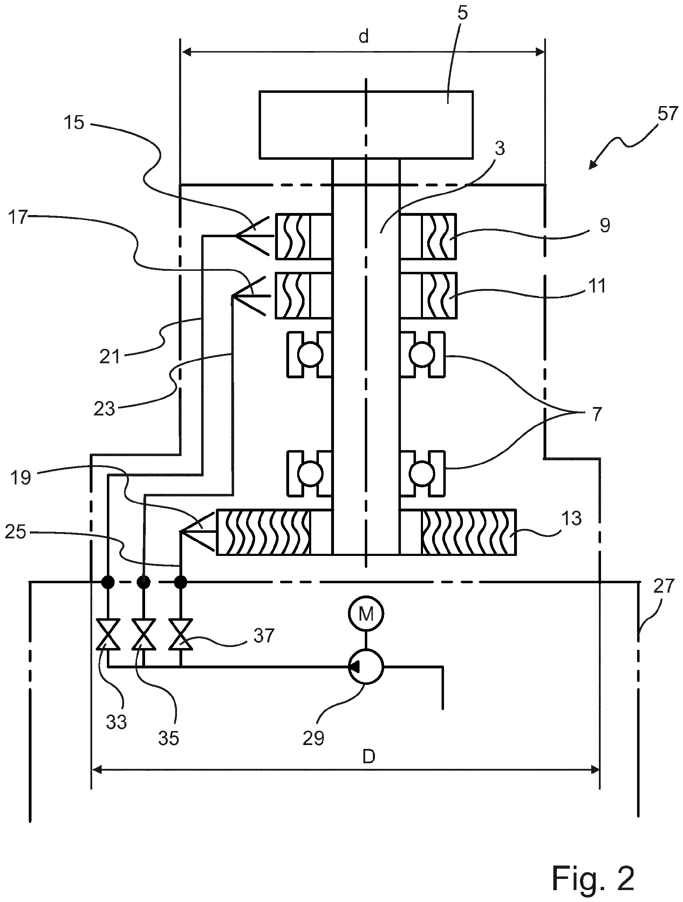

Es versteht sich von selbst, dass diese Ausführungsform lediglich beispielhaften Charakter hat. Es sind auch andere Konstellationen möglich, von denen einige in den Figuren 2 bis 13 beschrieben werden.

Bei dem Ausführungsbeispiel gemäß der Figur 2 ist das größte Laufrad 13 an einem zweiten Ende der Spindel 3 angeordnet. Das zweite Ende der Spindel 3 ist der Werkzeugaufnahme 5 gegenüberliegend angeordnet. Das bedeutet, dass die Wälzlager 7 bzw. die Lagerung der Spindel 3 zwischen den Laufrädern 11 und 13 angeordnet sind. Dadurch wandert eines der Lager 7 näher zur Werkzeugaufnahme 5, so dass die Spindel 3 insgesamt steifer wird. Dies führt auch zu einer günstigeren Belastung der Lagerung der Spindel 3. Außerdem ist am ersten Ende der Spindel 3, dort wo sich die Werkzeugaufnahme 5 befindet, der Bauraumbedarf für die Laufräder 9 und 11 kleiner. Dadurch ist bei dieser Konfiguration der Werkzeughalter im Bereich der Werkzeugaufnahme 5 schlanker, wie in der Figur 2 bildlich dargestellt und durch die Maße "d" und "D" hervorgehoben. Das ermöglicht die spanende Bearbeitung von Werkstücken auch an schwer zugänglichen Stellen.

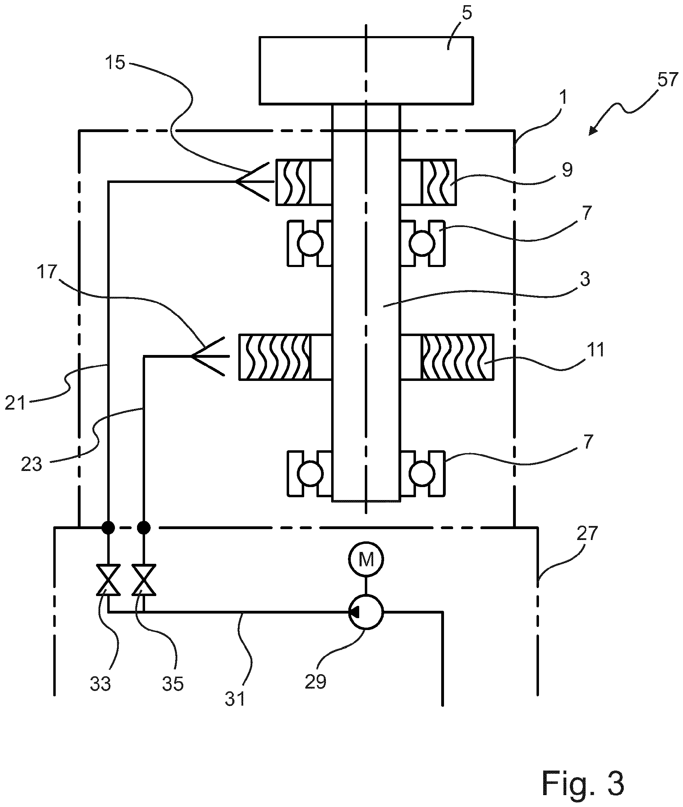

Bei dem Ausführungsbeispiel gemäß der Figur 3 sind zwei Laufräder 9 und 11 vorgesehen. Das Laufrad 11 zwischen den Lagern 7 angeordnet. Eines der Lager 7 ist an dem zweiten Ende der Spindel 3 angeordnet, so dass die Spindel 3 insgesamt steifer wird. Die sich aus dem Fluidstrahl, welcher aus der Düsenanordnung 17 auf das Laufrad 11 trifft, ergebenden dynamischen Belastungen, aber auch die sich aus der Unwucht eines Laufrades ergebenden Kräfte, werden stabiler und schwingungsärmer auf die Lagerung übertragen. Aufgrund der oftmals sehr hohen Drehzahlen mit denen gearbeitet werden soll, ist die Unwucht ein wesentlicher Faktor für den vibrationsfreien Lauf des Werkzeugs und ein gutes Bearbeitungsergebnis. Bei diesem Ausführungsbeispiel hat der Werkzeughalter zwei Fluidanschlüsse.

Generell besteht die Möglichkeit die Laufräder vor, hinter oder zwischen den Lagern anzuordnen und die Anordnung so zu wählen, dass eine optimale Einbaugeometrie und damit optimale Außengeometrie des Werkzeughalters und / oder der Lagerbelastung und des Schwingungsverhaltens erreicht wird.

Außerdem ist am ersten Ende der Spindel 3, dort wo sich die Werkzeugaufnahme 5 befindet, der Bauraumbedarf für das Laufrad 9 sehr gering.

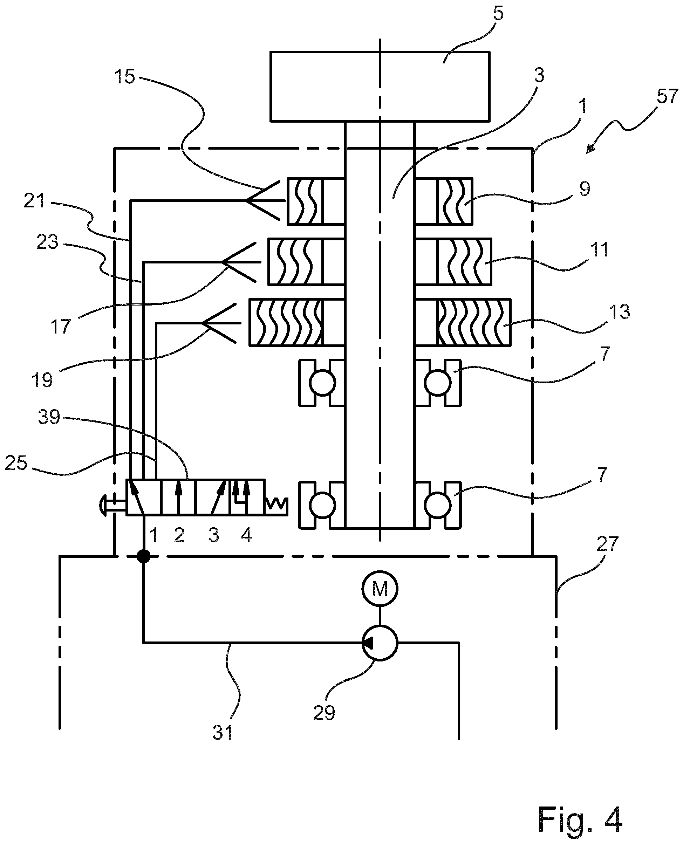

Bei dem Ausführungsbeispiel gemäß der Figur 4 sind die Wege-Ventile 33, 35 und 37 zu einem (Wege-)Ventil 39 mit mehreren Anschlüssen und Schaltstellungen zusammengefasst. Das Wege-Ventil 39 ist bei diesem Ausführungsbeispiel im Gehäuse 1 des Werkzeughalters 57 integriert. Das von der Pumpe 29 geförderte Fluid wird zentral über eine hydraulische Schnittstelle von der Werkzeugmaschine zu dem Werkzeughalter 57 geführt. Von dort gelangt das Fluid zu dem Wege-Ventil 39.

Wenn das Wege-Ventil 39 in den Werkzeughalter 57 integriert ist, dann reicht eine Fluidschnittstelle zwischen Werkzeugmaschine und Werkzeughalter 57 aus. Bei diesem Ausführungsbeispiel hat der Werkzeughalter einen Fluidanschluss.

Das Wege-Ventil 39 hat bei diesem Ausführungsbeispiel vier Schaltstellungen 1, 2, 3, 4. Bei den Schaltstellungen 1 bis 3 wird jeweils eine Düsenanordnung 15, 17 und 19 mit Arbeitsfluid versorgt.

In der vierten Schaltstellung beaufschlagen die Düsenanordnungen 15 und 17 die Laufräder 9 und 11 gleichzeitig oder parallel mit Fluid. Dadurch steht ein größeres Drehmoment an der Spindel 3 zur Verfügung, als wenn nur eines der Laufräder 9, 11 oder 13 mit Fluid beaufschlagt wird. Allgemein gesagt, ermöglicht das Wege-Ventil 39 je nach Ausführung und Schaltstellung, die Versorgung einer oder mehrerer Düsenanordnungen 15, 17, 19 mit Fluid in verschiedensten Kombinationen.

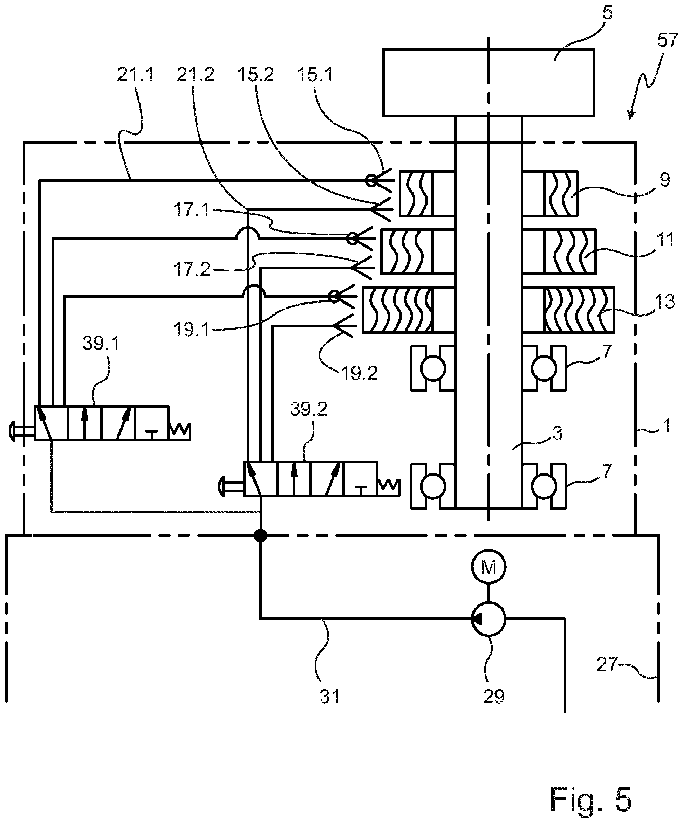

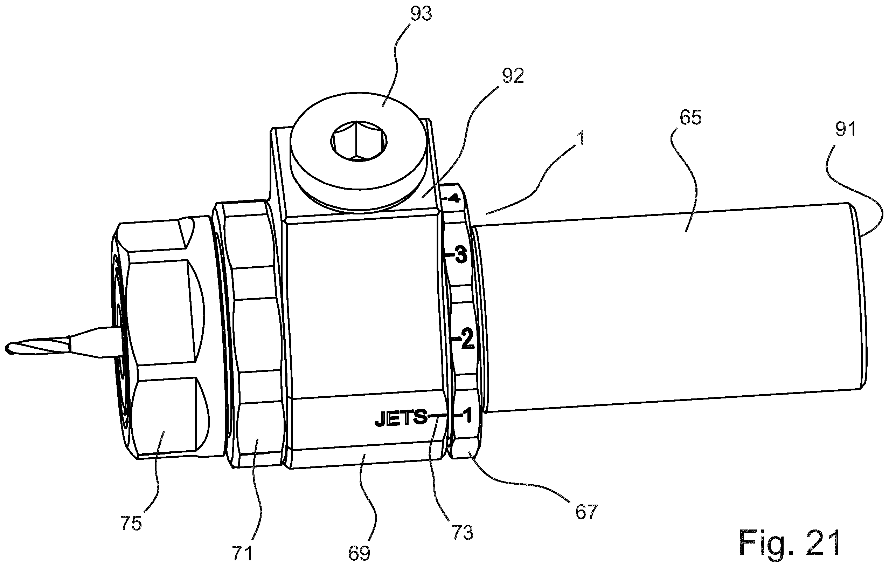

Die Parallelschaltung von zwei Düsenanordnungen 15 und 17 erfordert nicht notwendigerweise zwei getrennte Laufräder 9 und 11. Es ist auch möglich, ein Laufrad etwas breiter auszuführen, so dass zwei Düsenanordnungen auf ein Laufrad wirken. Eine solche Konfiguration ist in der Figur 5 und den Figuren 21 ff dargestellt. Die Laufräder 9, 11, 13 sind so breit, dass zwei Düsenanordnungen auf ein Laufrad wirken.

Weiterhin ist es möglich bei gleichbleibender Laufradbreite, mehrere Düsenanordnungen 15, 17, 19 hintereinander am Umfang eines Laufrads anzuordnen. Die zugehörigen Laufräder können auf diese Weise für unterschiedliche Düsenanordnungen und Fluidbedingungen ausgelegt werden.

So kann zum Beispiel die Düsenanordnung 15 so ausgelegt sein, dass eine maximale Austrittsgeschwindigkeit des Fluids erreicht wird. Die Düsenanordnung 17 kann so ausgelegt werden, dass die Austrittsgeschwindigkeit des Fluids niedriger ist, aber der Austrittsquerschnitt der Düsenanordnung 17 größer ist. Dann kann man die Düsenanordnung 17 zum Beschleunigen der Spindel 3 und für Schrupp-Bearbeitungen einsetzen, während die Düsenanordnung 15 beim Schlichten zum Einsatz kommt. Beide Düsenanordnungen 15, 17 können auf das gleiche Laufrad 9 gerichtet sein.

Bei dem in der Figur 5 schematisch dargestellten Ausführungsbeispiel sind die Düsenanordnungen 15, 17 und 19 sowie die Zuleitungen 21, 23 und 25 und die Wegeventile 39.1 bzw. 39.2 jeweils gedoppelt. Aus Gründen der Übersichtlichkeit sind nicht alle Zuleitungen mit Bezugszeichen versehen worden.

Dadurch ist es möglich, beispielsweise das kleinste Laufrad 9 mit Fluid aus der Düsenanordnung 15.1 und/oder oder Düsenanordnung 15.2 zu beaufschlagen. Entsprechend können auch die Laufräder 11, 13 wahlweise mit Fluid aus den Düsenanordnungen 17.1 und/oder oder 17.2 bzw. 19.1 und/oder oder 19.2 beaufschlagt werden.

Dadurch wird die Zahl der Schaltkombinationen mehr als verdoppelt und der Anwendungsbereich des Werkzeughalters 57 wird deutlich erweitert. Der hydraulische Anschluss an die Werkzeugmaschine bzw. die Pumpe 29 kann über eine Schnittstelle, wie dargestellt, oder mehrere Verbindungen erfolgen.

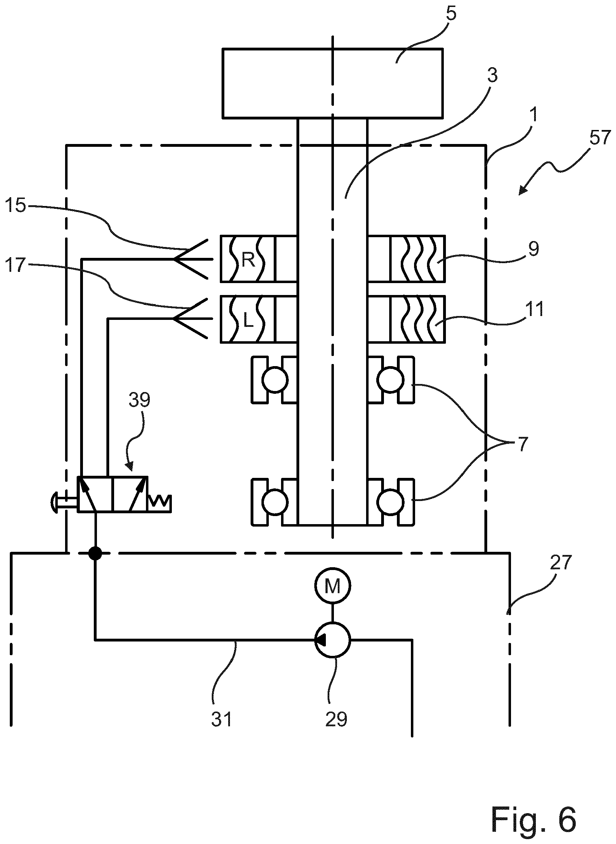

In der Figur 6 ist ein Ausführungsbeispiel dargestellt, bei dem zwei Laufräder 9, 11 an der Spindel 3 angeordnet sind. Die Laufrichtung der Laufräder 9 und 11 und dementsprechend auch die Ausrichtung der Düsenanordnungen sind unterschiedlich. Dies ist in der Figur 5 durch ein "R" am Laufrad 9 und ein "L" im Laufrad 11 angedeutet. Die Drehrichtung des Laufrads 9 ist im Uhrzeigersinn (rechtsdrehend), während das Laufrad 11 sich im Gegen-Uhrzeigersinn dreht (linksdrehend).

Die Durchmesser beider Laufräder sind in diesem Ausführungsbeispiel gleich. Das muss aber nicht so sein.

Wenn das Laufrad 9 über die Düsenanordnung 15 mit Fluid beaufschlagt wird, dreht sich die Spindel 3 im Uhrzeigersinn. Wenn das Laufrad 11 mit Fluid aus der Düsenanordnung 17 beaufschlagt wird, dreht sich die Spindel 3 im Gegen-Uhrzeigersinn. Drehzahl und Drehmoment sind in beiden Drehrichtungen gleich, wenn die hydraulische Auslegung der Laufräder 9 und 11 gleich ist.

Die erfindungsgemäße Umkehr der Drehrichtung ermöglicht neue Einsatzmöglichkeiten und Funktionalitäten, wie z.B. Gewindeschneiden und das aktive Bremsen der Spindel 3. Die Umkehr der Drehrichtung ist auch bei komplexen Bearbeitungen mit zweistufigen Werkzeugen (eine Stufe links schneidend, eine zweite Stufe rechts schneidend) vorteilhaft. Diese Option kann bei reversierenden Bearbeitungen zum Einsatz kommen. Sie ermöglicht darüber hinaus die einfache manuelle Umstellung für ein links-/rechtschneidendes Werkzeug beim Einrichten der Maschine.

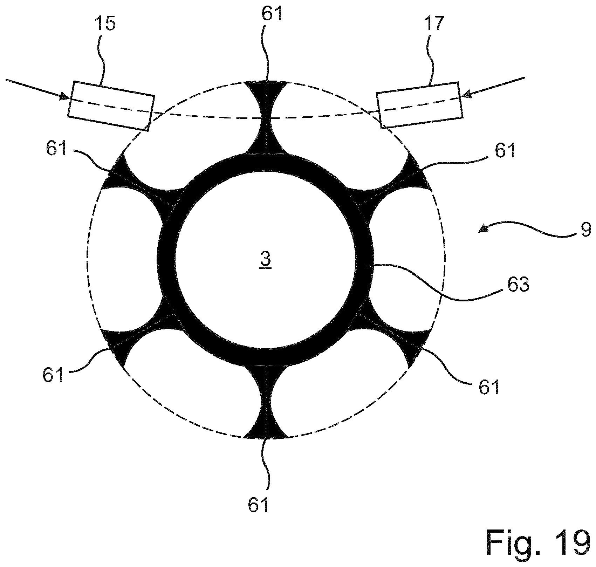

Es ist auch möglich, diese Drehrichtungsumkehr mit einem Laufrad zu realisieren; siehe dazu die Figur 19 und deren Beschreibung.

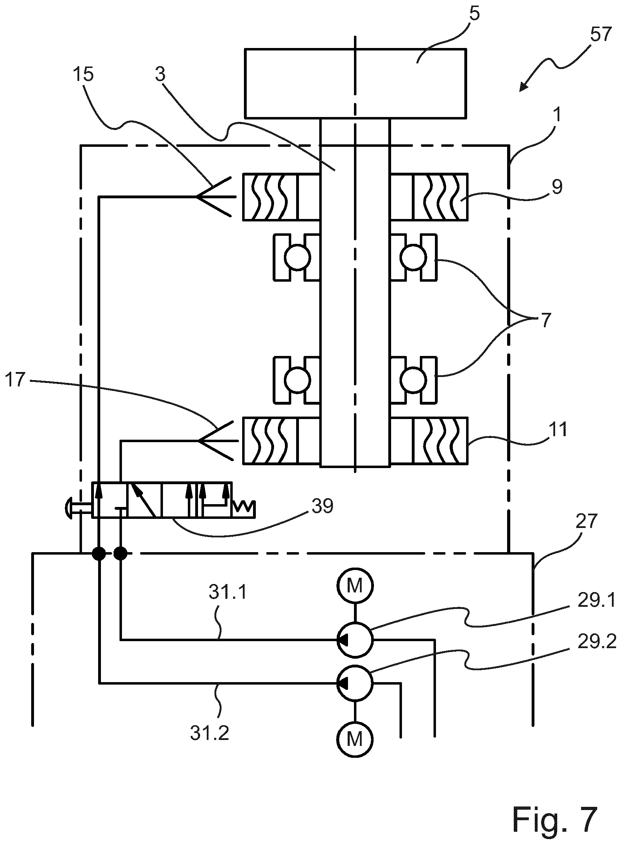

Bei dem Ausführungsbeispiel gemäß Figur 7 sind zwei Pumpen 29.1 und 29.2 vorhanden. Beide Pumpen 29.1 und 29.2 können ein flüssiges Arbeitsfluid mit unterschiedlichen Drücken und/oder Volumenströmen zur Verfügung bereitstellen. Alternativ kann auch eine Pumpe, zum Beispiel die Pumpe 29.1, ein flüssiges Fluid fördern, während die zweite Pumpe 29.2 ein gasförmiges Fluid (Luft) fördert. In diesem Fall wäre die Pumpe 29.2 z.B. ein Kompressor oder Anschluss an ein vorhandenes Fluidnetz (Druckluftnetz). Dadurch lässt sich der Arbeitsbereich des Werkzeughalters 57 noch weiter vergrößern.

Es gibt für jedes Fluid eine Übergabestelle zwischen der Werkzeugmaschine bzw. dem Revolver 27 und dem angetriebenen Werkzeughalter 57.

In der in Figur 7 dargestellten Schaltstellung des Wegeventils 39 wird die Düsenanordnung 15 mit Fluid versorgt und infolge dessen das erste Laufrad 9 mit dem von der zweiten Pumpe 29.2 geförderten Fluid beaufschlagt.

In der zweiten Schaltstellung des Wegeventils 39 (nicht dargestellt) wird die Düsenanordnung 15 von der ersten Pumpe 29.1 mit Fluid versorgt. In einer dritten Schaltstellung wird die Düsenanordnung 17, welche das Laufrad 11 mit Fluid beaufschlagt, mit dem von der ersten Pumpe 29.1 geförderten Fluid beaufschlagt. In der vierten Schaltstellung des Wegeventils 39 werden beide Düsenanordnungen 15 und 17 mit Fluid, je nach Ausführung des Wegeventils, entweder von der ersten Pumpe 29.1 oder zweiten Pumpe 29.2 versorgt.

Mit Wasser oder Kühlschmiermittel als Fluid sind die Drehzahlen begrenzt; aber das Drehmoment größer. Durch Umstellung auf Druckluft als Arbeits-Fluid kann die Drehzahl der Spindel 3 deutlich erhöht werden. So kann der Schruppvorgang, welcher ein höheres Drehmoment erfordert, mit Wasser als Arbeits-Fluid durchgeführt werden. Beim anschließenden Schlichtvorgang wird die Spindel 3 mit Druckluft angetrieben. Wegen der wesentlich höheren Drehzahl lassen sich sehr gute Oberflächen erzielen.

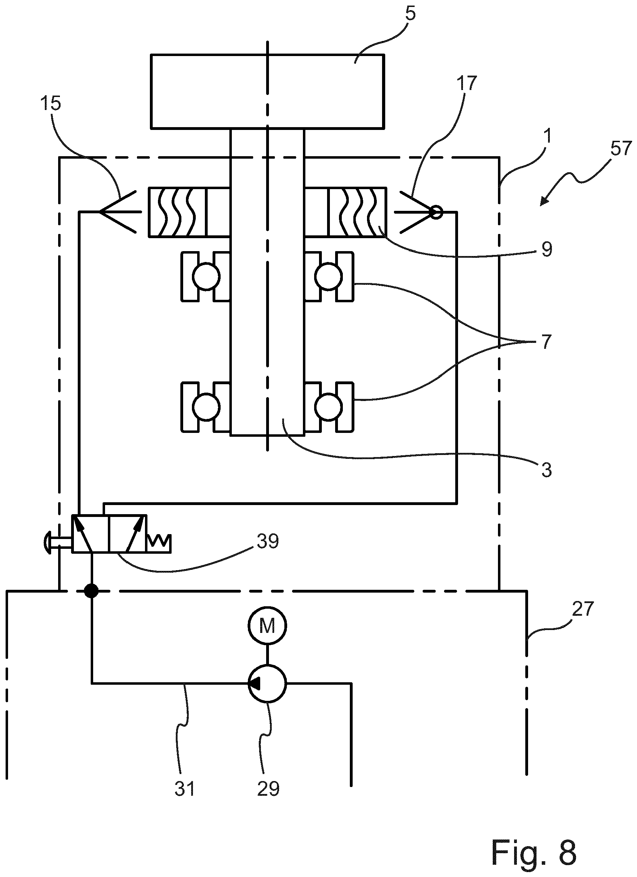

In der Figur 8 ist ein Ausführungsbeispiel eines Werkzeughalters mit einem Laufrad 9 und zwei separat schaltbaren Düsenanordnungen 15 und 17 dargestellt. Beide Düsenanordnungen 15, 17 beaufschlagen das gleiche Laufrad 9 mit Fluid. Die Düsenanordnungen 15 und 17 können sich beispielsweise bezüglich der Zahl der Düsen und/oder der Austrittsfläche der Düsen unterscheiden. Dadurch kann die hydraulische Leistung des Fluids, das auf das Laufrad 9 auftrifft, gesteuert werden. In Folge dessen ändern sich auch Arbeitsdrehzahl und/oder Drehmoment der Spindel 3.

Bei diesem Ausführungsbeispiel hat das Wegeventil 39 zwei Schaltstellungen. Anhand dieses Beispiels wird besonders deutlich, wie einfach die Umschaltung zwischen unterschiedlichen Düsenanordnungen ist.

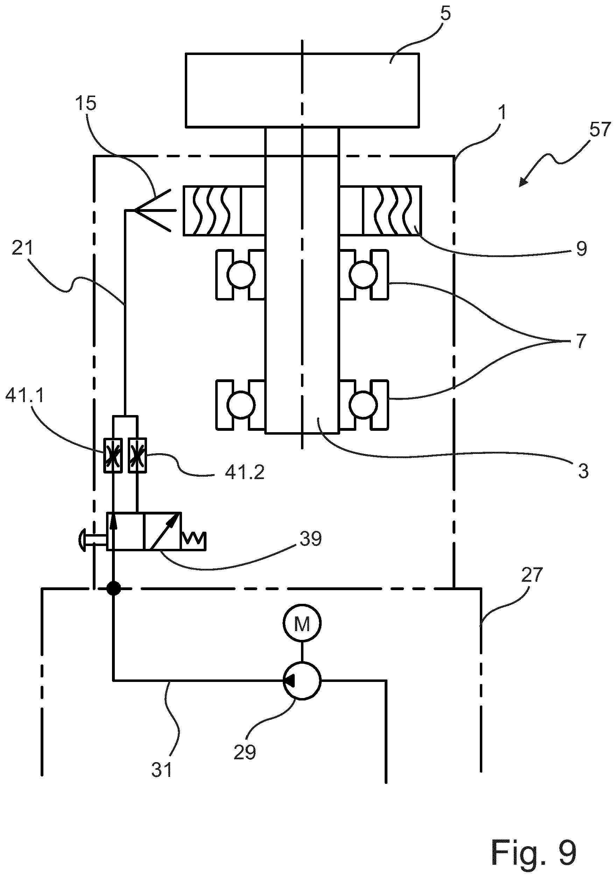

In der Figur 9 ist ein Ausführungsbeispiel dargestellt, bei dem stromabwärts des Wegeventils 39 zwei Drosseln 41.1 bzw. 41.2 oder Blenden mit unterschiedlichen Charakteristiken in der Zuleitung 21 eingebaut sind. Die Drosseln 41.1 bzw. 41.2 reduzieren den Druck oder den Volumenstrom des Fluids, das von der Pumpe 29 gefördert wird und auf die Düsen wirkt. Dadurch ist eine weitere Anpassung des Arbeitsbereichs des Werkzeughalters 57 möglich. Es ist auch möglich, nur an einem Ausgang des Wegeventils 39 eine Drossel 41 vorzugsehen und den anderen Ausgang ungedrosselt in die Zuleitung 21 zu führen (nicht dargestellt).

Bei allen Ausführungsbeispielen besteht die Notwendigkeit, das von den Düsenanordnungen 15, 17 oder 19 auf eines der Laufräder 9, 11 und/oder 13 geförderte Fluid anschließend aus dem Gehäuse 1 des Werkzeughalters abzuführen. Dieses Abführen oder Ableiten des "verbrauchten" Fluids ist in den Figuren 1 bis 9 aus Gründen der Übersichtlichkeit nicht dargestellt.

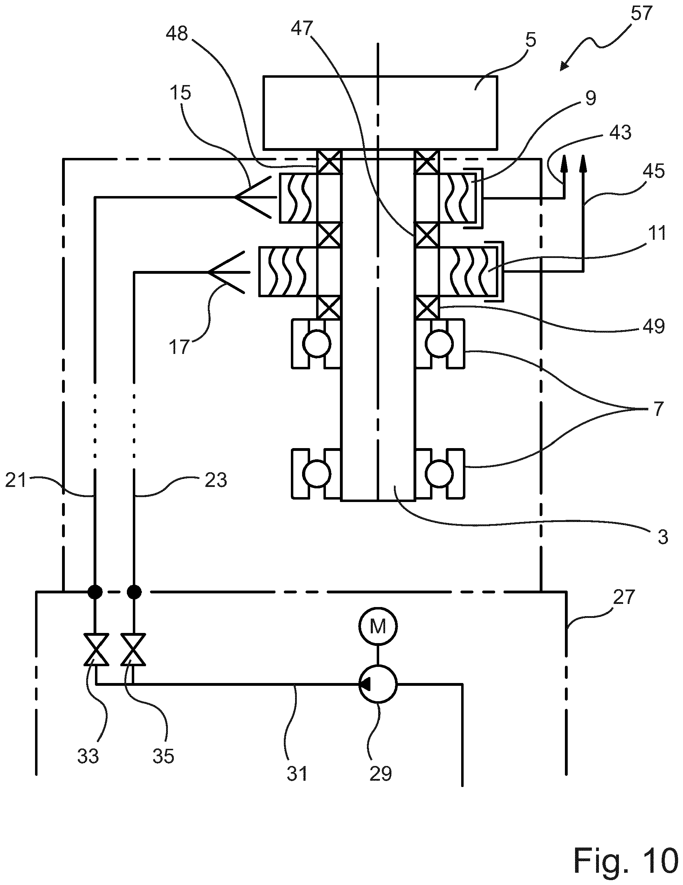

In der Figur 10 sind Ableitungen 43 und 45 für die Laufräder 9 und 11 schematisch dargestellt. Bei diesem Ausführungsbeispiel sind die Ableitungen 43 und 45 durch eine Dichtung 47 voneinander getrennt, so dass sich die Laufräder 9 und 11 nicht gegenseitig beeinflussen. Das verbessert oftmals den Wirkungsgrad der Turbinen, indem die sonst entstehenden Wirbelverluste vermieden werden.

Zwischen der Werkzeugaufnahme 5 und dem Laufrad 9 ist eine Dichtung 48 angedeutet.

Die (Wälz-)Lager 7 sind in der Regel durch eine oder mehrere Dichtungen 49 von den Laufrädern 9, 11 bzw. 13 getrennt. Die Dichtungen können dabei berührend, nicht berührend oder als Kombinationen aus beidem ausgeführt werden.

Die Wege-Ventile 33 und 35 sind Teil der Werkzeugmaschine; es ist auch möglich, die Düsenanordnungen 15, 17 durch ein in den Werkzeughalter 57 integriertes Wege-Ventil (nicht dargestellt) zu steuern.

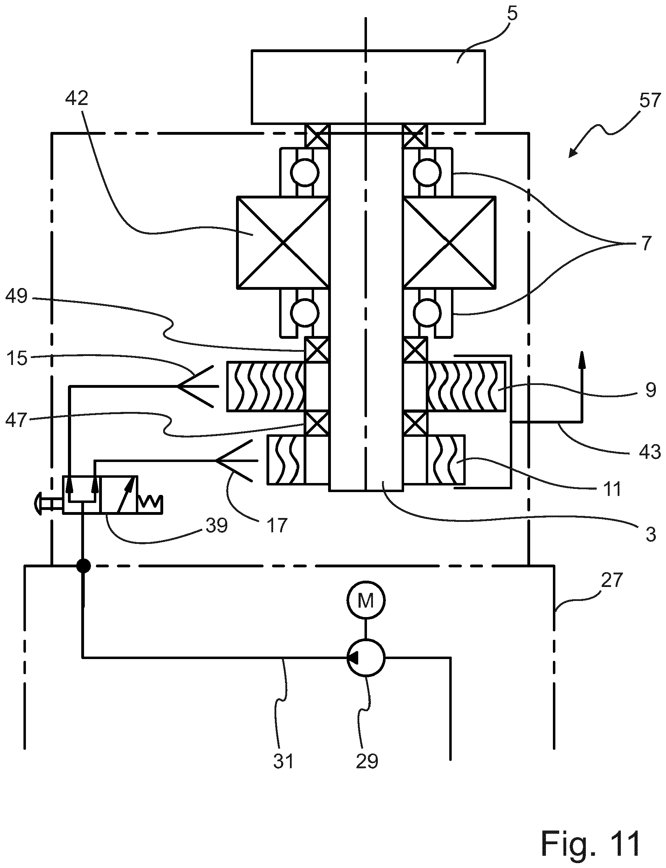

In der Figur 11 ist ein Ausführungsbeispiel mit einer Schwungmasse 42, die auf der Spindel 3 montiert ist, dargestellt. Die Schwungmasse 42 erhöht das Rotationsträgheitsmoment der Spindel 3 und verbessert deren Laufruhe. Aufgrund der geringen Masse der Spindel 3, kann es in der Praxis zu Schwingungsproblemen bei der Bearbeitung kommen. Abhilfe kann in vielen Fällen eine rotierende Schwungmasse 42 schaffen.

Allerdings ist es aufgrund des großen Rotationsträgheitsmoments der Schwungmasse schwierig, die Spindel 3 mit einer kleinen und hochdrehenden Turbine auf die Betriebsdrehzahl zu bringen.

Wie sich aus der Figur 11 ergibt, können beide Laufräder 9 und 11 gleichzeitig bzw. parallel mit Fluid aus den Düsenanordnungen 15 und 17 beaufschlagt werden. Dadurch kann beim Start die Schwungmasse 42 zunächst durch beide Laufräder 9, 11 beschleunigt werden, bevor anschließend nur eines der Laufräder 9 oder 11 die Beschleunigung auf die Betriebsdrehzahl und die anschließende Bearbeitung übernimmt. In dem dargestellten Ausführungsbeispiel wird in der zweiten Schaltstellung des Wegeventils 39 die Düsenanordnung 17, welche das Laufrad 11 mit Fluid beaufschlagt, geöffnet. Die Düsenanordnung 15 ist geschlossen. Selbstverständlich können die Laufräder 9, 11 einzeln zum Antrieb der Spindel 3 genutzt werden.

Bei diesem Ausführungsbeispiel gibt es eine gemeinsame Ableitung 43 für die Laufräder 9 und 11.

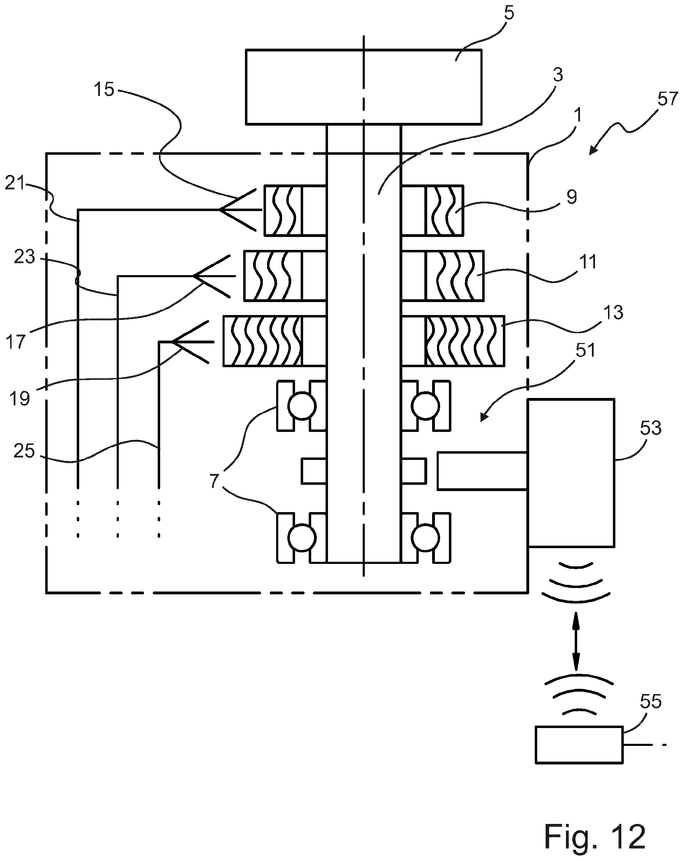

In der Figur 12 ist ein mit Sensoren ausgestatteter Werkzeughalter 57 schematisch dargestellt. Die dargestellte Sensorik 51 kann zur Erkennung diverser Betriebszustände eingesetzt werden. Sie kann beispielsweise einen Drehzahlsensor mit einem Hallgeber umfassen. Das Ausgangssignal des Drehzahlsensors wird zu einer Auswerteeinheit 53 übertragen. Von dort kann das Ausgangssignal des Drehzahlsensors oder andere Ausgangsgrößen der Auswerteeinheit 53 drahtlos zu einem Empfänger 55 übertragen, der wiederum mit der Steuerung der Werkzeugmaschine kommuniziert.

Durch die Auswertung der Drehzahl der Spindel 3 kann beispielsweise die Umschaltung zwischen den verschiedenen Düsenanordnungen 15, 17, 19 automatisiert und optimiert werden. Die Funktionalität der Steuereinheit kann auch in die die Auswerteieinheit 53 integriert werden. Die mit der Sensorik 51 verbundene Steuereinheit ermöglicht darüber hinaus die Ansteuerung und Betätigung des oder der Wege-Ventile 35 bis 39.

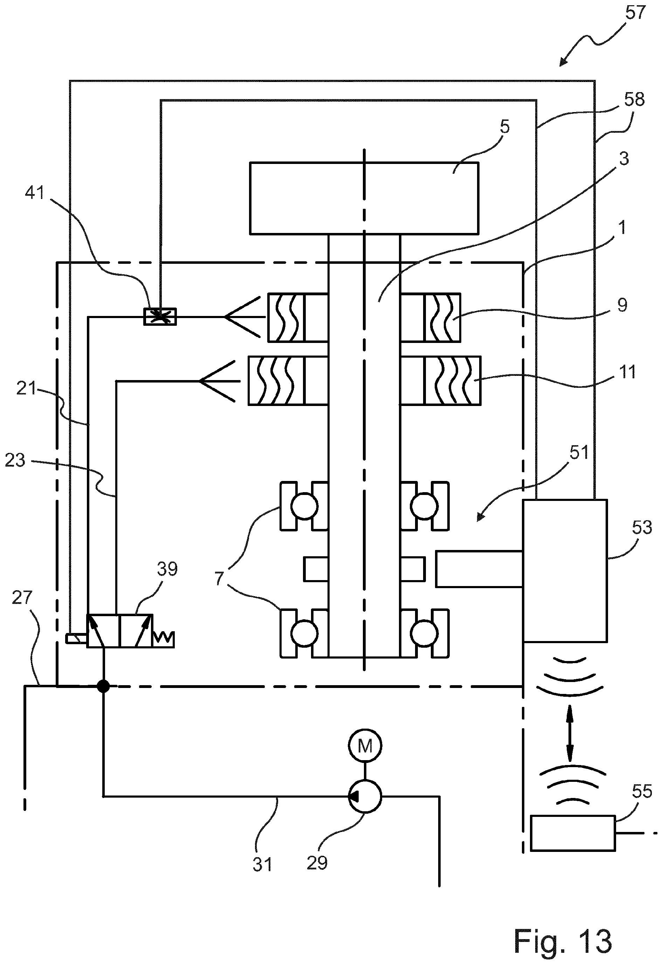

In der Figur 13 ist stark vereinfacht eine Konfiguration dargestellt bei der die Steuereinheit in die Auswerteinheit 53 integriert ist. Die Sensorik 51 arbeitet mit der Auswerteeinheit 53 zusammen, deren Sender die Daten an einen Empfänger 55 überträgt. Diese Datenübertragung kann auch bidirektional sein.

Die Auswerteeinheit 53 hat direkte Verbindungen 58 (drahtlos oder leitungsgebunden) mit dem Wegeventil 39 und dem regelbaren Stromregelventil oder der Drossel 41, so dass die Betätigung des oder der Wege-Ventile 33 bis 39 und /oder der Drossel 41 in Abhängigkeit der von dem Sensor 51 erfassten Drehzahl oder weiterer Parameter erfolgen kann. Die Auswertung der Ausgangsdaten der Sensorik 51 und die Berechnung von Steuersignalen, die über die Verbindungen 58 (z. B. Signalleitzungen) übertragen werden, kann entweder auf der Werkzeugmaschinenseite und/oder in der Auswerteeinheit 53 erfolgen.

Erfolgt die Auswertung in der Auswerteeinheit 53, können Daten, die vom Empfänger 55 in Richtung der Auswerteeinheit 53 übertragen werden, in die Berechnung einfließen. Erfolgt die Auswertung ausschließlich auf Seiten der Werkzeugmaschine, werden die Steuersignale vom Empfänger 55 an die Auswerteeinheit 53 übertragen und von dort über die Verbindungen 58 an die Ventile übermittelt.

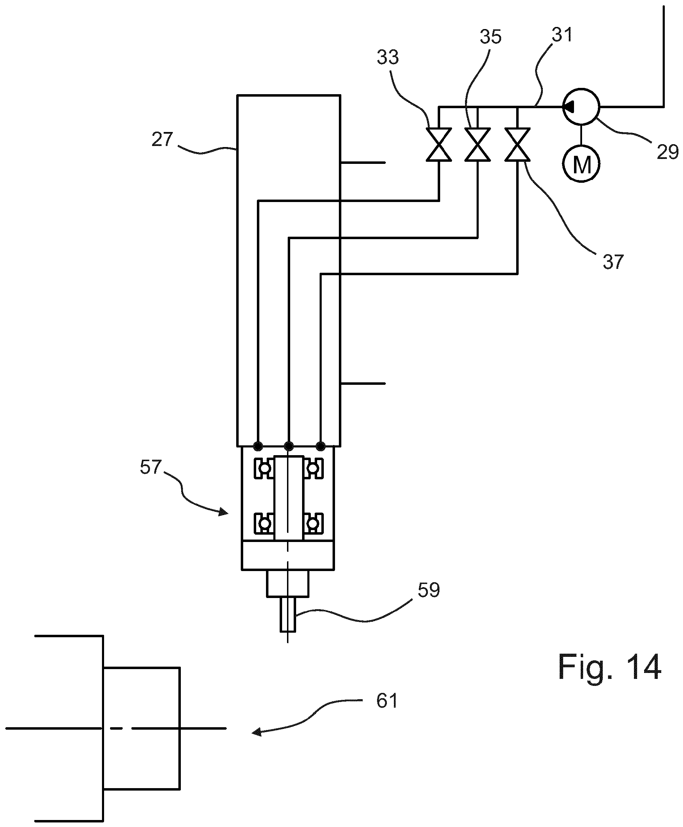

Figur 14 zeigt nochmals den Gesamtaufbau einer Werkzeugmaschine am Beispiel eines Drehzentrums. Das Werkstück 61 ist in einer Maschinenspindel eingespannt. Der Werkzeughalter 57 ist auf einem Werkzeugrevolver 27 montiert. Das Werkzeug 59 befindet sich in der Werkzeugaufnahme 5 der Spindel 3 des erfindungsgemäßen Werkzeughalters 57. Die Werkzeugmaschine verfügt über eine Fluidzufuhr, die eine Pumpe 29 mit einem Motor M und ein oder mehrere Wege-Ventile 33, 35, 37 umfasst; die Wege-Ventile 33, 35, 37 sind mit der Förderseite 31 der Pumpe 29 verbunden. Die Wege-Ventile 33, 35, 37 sind wiederum über Leitungen und weiteren nicht dargestellten Bauelementen wie Drehdurchführungen und weiteren Ventilen mit dem Werkzeugrevolver 27 und durch diesen mit dem angetriebenen Werkzeughalter 57 verbunden.

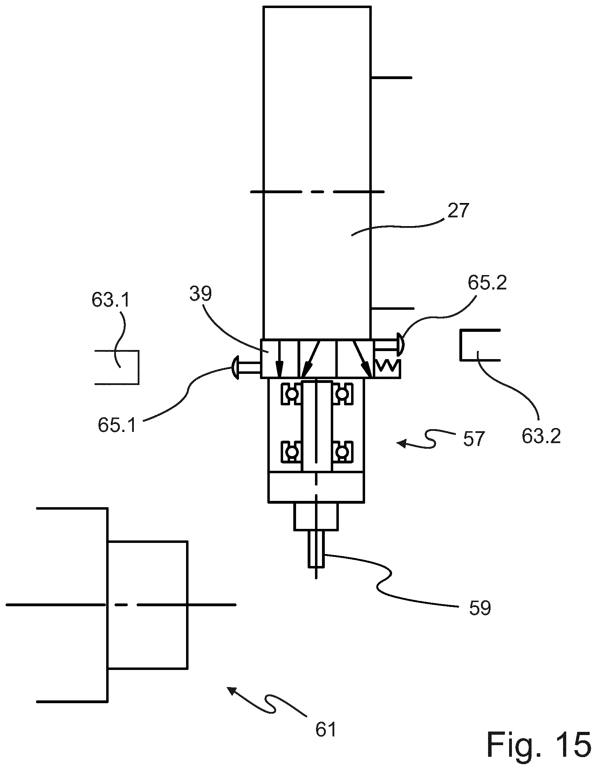

Nachfolgend werden, ausgehend von dieser Konfiguration verschiedene Arten der Betätigung des Wegeventils 39 anhand der Figuren 15 bis 18 erläutert.

In der Figur 15 ist eine mechanische Betätigung des Wegeventils 39 durch Verfahren des Werkzeughalters 57 schematisch dargestellt. Zu beiden Seiten des Revolvers 27 sind feststehende Anschläge 63.1 und 63.2 angeordnet. An dem Wegeventil 39 sind an beiden Seiten Betätigungsbolzen 65.1 und 65.2 ausgebildet, welche auf das Stellglied des Wegeventils 39 wirken.

Wenn der Betätigungsbolzen 65.1 des Wegeventils 39 gegen den Anschlag 63.1 bewegt wird, dann wird das Stellglied des Wege-Ventils 39 betätigt und das Wege-Ventil 39 nimmt eine andere Schaltstellung ein. In ähnlicher Weise können die anderen Schaltstellungen des Wegeventils 39 dadurch aktiviert werden, dass der Betätigungsbolzen 65.2 auf der anderen Seite des Wegeventils 39 gegen den zweiten Anschlag 63.2 bewegt wird. Diese mechanische Betätigung des Wege-Ventils 39 ist bei jeder NC-gesteuerten Werkzeugmaschine ohne weiteres möglich. Dadurch ist es möglich, während der Bearbeitung und ohne nennenswerte Unterbrechung des Zerspanungsprozesses, zwischen den verschiedenen Düsenanordnungen bzw. Schaltstellungen des Wegeventils 39 umzuschalten, so dass für jeden Bearbeitungsschritt die optimale Spindeldrehzahl zur Verfügung steht.

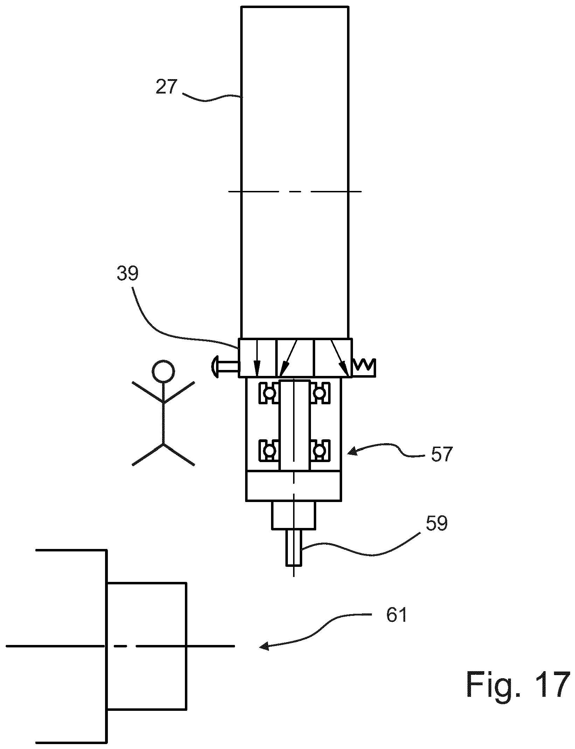

In der Figur 17 ist eine manuelle Betätigung des Wegeventils 39 durch den Maschinenbediener dargestellt. Der Bediener ist somit in der Lage, den Fluidfluss einzustellen und somit zu bestimmen welche Laufräder wie und wodurch mit Fluid versorgt werden.

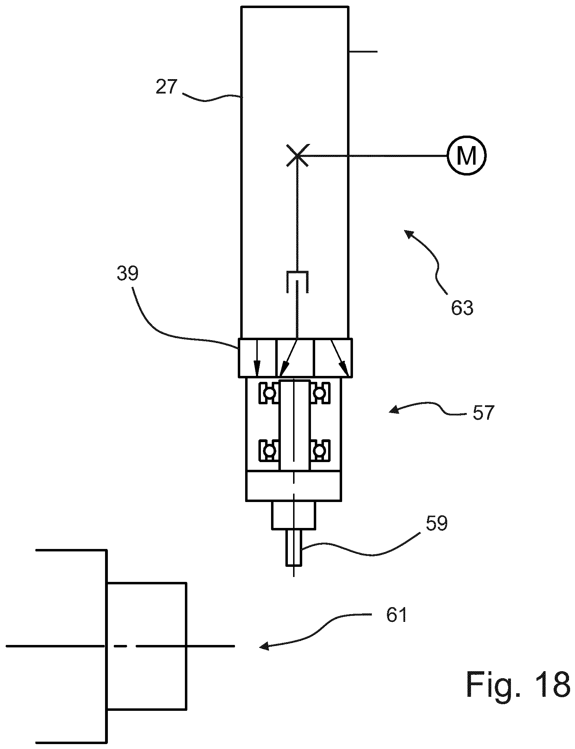

Figur 18 zeigt den Aufbau des durch Fluid angetriebenen Werkzeughalters 57 auf einem angetriebenen Werkzeugrevolver 27. Hierdurch ergibt sich die Möglichkeit, den Antrieb 63 des Werkzeugrevolvers zur Schaltung der Wegeventile zu nutzen. Der Antrieb 63 umfasst einen Motor M und eine Antriebswelle. Der Antrieb 63 wird normalerweise für den Antrieb von sogenannten angetriebenen Werkzeugen eingesetzt. Da bei dem erfindungsgemäßen Werkzeughalter der Antrieb der Spindel 3 über ein Fluid erfolgt, steht die Antriebswelle des Antriebs 63 für die Betätigung des Wegeventils 39 zur Verfügung. Dazu wird das oder die Wegeventile mit dem Antriebsmotor des Werkzeugrevolverantriebs über Getriebe und Wellen verbunden. Durch Ansteuerung des Antriebsmotors wird das oder die Wege-Ventile 39 gezielt geschaltet. Damit kann über die Steuerung der Werkzeugmaschine das (Wege-)Ventil 39 betätigt werden. Nicht alle Details der Betätigung des Wege-Ventils 39 durch den Antrieb 63 sind in der Figur 18 dargestellt.

In der Figur 19 ist stark schematisiert ein Ausführungsbeispiel eines Laufrads 9 in einem Schnitt dargestellt. Das Laufrad 9 umfasst insgesamt sechs Schaufeln oder Becher 61, die auf beiden Seiten jeweils eine konkave oder becherartige Form aufweisen. Sie sind bezüglich eines Radiusstrahls symmetrisch. Das bedeutet, dass sich die Drehrichtung des Laufrads 9 ändert, je nachdem welche der Düsenanordnungen 15 oder 17 mit Fluid beaufschlagt wird. Wenn die Düsenanordnung 15 aktiv ist, dann dreht sich das Laufrad 9 im Uhrzeigersinn. Wenn die Düsenanordnung 17 aktiv ist, dreht sich das Laufrad 9 im Gegen-Uhrzeigersinn.

Die Schaufeln oder Becher 61 des Laufrads 9 können direkt oder integraler Bestandteil der Spindel 3 sein. Sie können auch mit der Spindel 3 verschweißt sein oder auf der Spindel 3 aufgesetzt und mit einer aus dem Stand der Technik bekannten Welle-Nabenverbindung verbunden werden. Bei dem in Figur 19 vereinfacht dargestellten Ausführungsbeispiel sind die Becher 61 auf einem Ring 63 angeordnet, der wiederum auf der Spindel 3 aufgeschrumpft oder auf andere Weise mit der Spindel 3 drehfest verbunden ist.

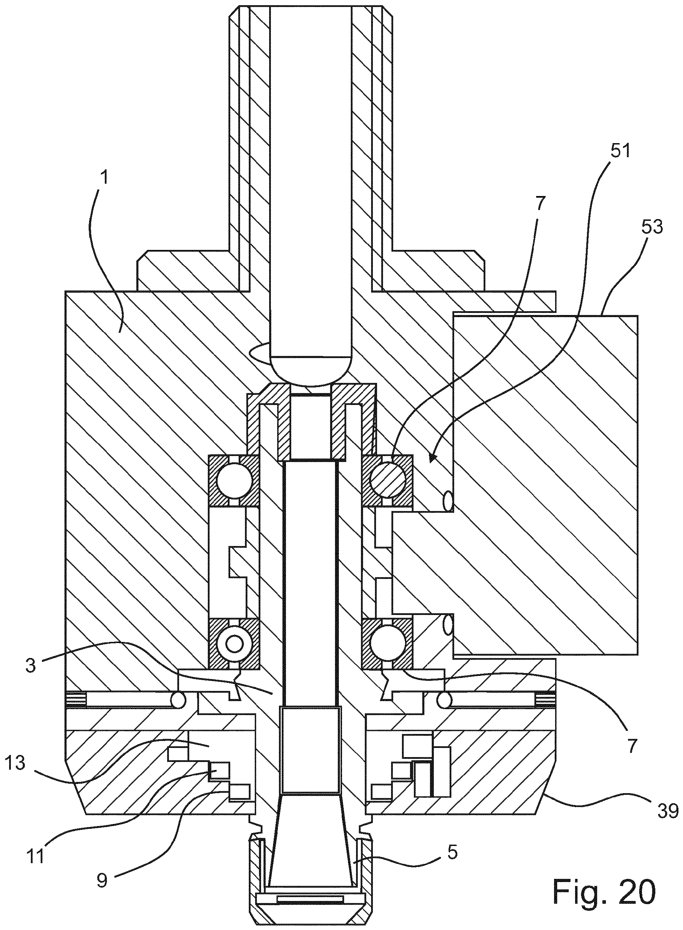

In der Figur 20 ist ein Schnitt durch einen erfindungsgemäßen Werkzeughalter 57 dargestellt, der etwas weniger schematisch ist und einige, wenige konstruktive Details zeigt.

Nachfolgend sind einige allgemeine Anmerkungen zu den Ausführungsbeispielen zusammengefasst.

Durch die Auslegung der Düsenanordnungen können die Strahlgeschwindigkeit und/oder der Volumenstrom des aus einer Düsenanordnung austretenden Fluids vorgegeben werden. Man kann beispielsweise die Düsenanordnung 15 so auslegen, dass das Fluid mit einer höheren Geschwindigkeit aus der Düsenanordnung 15 austritt als aus der anders ausgelegten Düsenanordnung 17.

In den Figuren 21 bis 27 werden weitere Ausführungsbeispiele erfindungsgemäßer Werkzeughalter dargestellt und nachfolgend erläutert. Bei diesem Ausführungsbeispiel ist das Werkzeug in die Spindel integriert. Es ist aber auch möglich, eine Werkzeugaufnahme 5 an der Spindel 3 vorzusehen und das Werkzeug in dieser Aufnahme zu spannen bzw. aufzunehmen.

Bei dem in den Figuren 21 bis 27 dargestellten Werkzeughalter umfasst das Gehäuse 1 einen Schaft 65, der dazu dient, den Werkzeughalter in einer entsprechenden Aufnahme einer Werkzeugmaschine einzuspannen. An dem Ende des Schafts 65 ist ein (erster) Fluidanschluss 91 ausgebildet.

Etwa in der Mitte des Gehäuses 1 ist ein Bund 67 ausgebildet. In Figur 21 ist links des Bunds 67 ein erfindungsgemäßer Stellring 69 angeordnet.

An dem Stellring 69 können weitere Fluidanschlüsse 92 ausgebildet sein. Über einen der Fluidanschlüsse 91, 92 wird der Werkzeughalter mit dem zum Antrieb der mindestens einen Turbine erforderlichen unter Druck stehenden Fluids versorgt.

Der zweite Fluidanschluss 92 ist ein radialer Anschluss 92 an dem Stellring 69. Über jeden der Fluidanschlüsse 91, 92 kann der Verteilungsraum 86 (siehe die Figuren 22b, 22c und 22d) mit unter Druck stehendem Fluid versorgt werden. Es ist erfindungsgemäß vorgesehen, nur einen der Fluidanschlüsse 91 (im Schaft 65), 92 (im Stellring 69) zu nutzen und die jeweils nicht benötigten Fluidanschlüsse mit einem Stopfen 93 zu verschließen und dadurch zu deaktivieren.

Der Stellring 69 wird von einer Mutter 71 gegen eine Dichtfläche (nicht sichtbar in der Figur 21) des Gehäuses 1 gedrückt. Die Mutter 71 ist auf ein (Fein-)Gewinde des Gehäuses 1 aufgedreht. Durch mehr oder weniger weites Aufdrehen der einer Mutter 71 auf das Gewinde des Gehäuses 1 kann ein Spalt zwischen der Dichtfläche des Gehäuses und einer Gegenfläche des Stellrings 69 bei der Montage sehr feinfühlig eingestellt und auf null reduziert oder sogar vorgespannt werden, so dass eine gute Dichtwirkung erreicht wird und der Stellring 69 relativ zu dem Bund 67 bzw. zu dem Gehäuse 1 verdreht werden kann. Das Verdrehen kann mit Hilfe eines Gabelschlüssels erfolgen.

An dem Bund 67 sind die Markierungen "1", "2","3","4" und "5" angebracht. Wenn die Markierung 73 "Jets" des Stellrings 69 zur Deckung mit der Markierung "1" an dem Bund 67 kommt, versorgt eine Zuleitung eine Düsenanordnung mit Fluid. Das aus der Düsenanordnung austretende Fluid treibt ein auf der Spindel 3 (siehe z. B. Figur 22b) angeordnetes Laufrad 9 an. Wenn der Stellring 69 in der Figur 21 gegen den Uhrzeigersinn soweit gedreht wird, dass die Markierung "2" des Bundes 67 zur Deckung mit der Markierung 73 "Jets" des Stellrings 69 gelangt, sind zwei Zuleitungen geöffnet und demzufolge zwei Düsenanordnungen aktiv. Entsprechendes gilt für die weiteren Markierungen "3" bis "5".

An dem in Figur 21 linken Ende des Werkzeughalters ist eine Abdeckung oder Kappe 75 angeordnet. Die Kappe 75 schützt das Innere des Gehäuses, insbesondere die Spindel und das Laufrad der Turbine vor Beschädigungen.

In den Figuren 22 a, b, c und d ist ein Werkzeughalter gemäß Figur 21 in verschiedenen Schnitten dargestellt.

Figur 22 a zeigt den Werkzeughalter in der Draufsicht. In der Figur 22 a sind die Ableitungen (ohne Bezugszeichen) für das "verbrauchte" Fluid zu erkennen. Sie besteht aus einer Vielzahl kleiner konzentrisch zu der Spindel bzw. dem Werkzeug angeordneter Bohrungen. Weiter zeigt sie die Schnittebenen für die Figur 22 b mit dem Schnittverlauf A-A und für die Figuren 22 c und 22 d mit dem Schnittverlauf B-B.

Der Schnittverlauf B-B wird in zwei Ausführungen dargestellt, bei denen sich die Position des Stopfens 93 unterscheidet. In der Figur 22 c befindet sich der Stopfen im Schaft 65 und verschließt somit den (ersten) Fluidanschluss 91, während der radial am Stellring 69 angeordnete zweite Fluidanschluss 92 (Anschluss seitlich) zur Versorgung mit Fluid genutzt wird. In der Figur 22 d befindet sich der Stopfen im seitlichen Fluidanschluss 92 des Stellrings 69 und die Versorgung mit Fluid erfolgt über den Fluidanschluss 91.

In diesen Längsschnitten 22 b, 22 c, 22 d sind die Spindel 3 und die Lager 7 sowie ein sehr breites Laufrad 9 zu erkennen. Anhand der Figuren 22 a bis d, 23 und 25 - 27 lässt sich der Weg des Fluids durch das Gehäuse 1 näher erläutern.

Der erste Fluidanschluss 91 geht in eine Sacklochbohrung 77 im Schaft 65 über. An deren Ende sind mehrere Versorgungsbohrungen 79 vorhanden. Insgesamt sind bei diesem Ausführungsbeispiel acht solcher Versorgungsbohrungen 79 ausgebildet.

Sie beginnen am Ende der Sacklochbohrung 77 in unmittelbarer Nähe der Längsachse des Schaftes 65; sie erstrecken sich in Richtung des vorderen Endes des Werkzeughalters und sind nach auch außen gerichtet. In der Figur 23 ist das Gehäuse 1 ohne Anbauteile dargestellt. In dieser Darstellung sind die radial äußeren Enden der Versorgungsbohrungen 79 gut zu erkennen. Anhand der Figuren 22 a bis d und 23 ist zu erkennen, dass die äußeren Enden der Versorgungsbohrungen 79 in einen Verteilungsraum 86 enden.

An den Verteilungsraum 86 schließt sich ein zweiter Bund 95 an. Dieser zweite Bund 95 von mehreren (Axial-)Nuten 89 durchzogen und hat auf einer Seite einen Konus. Dieser "unterbrochene Konus" ist zugleich die Dichtfläche 81. Von dieser Dichtfläche 81 gehen zwischen den Nuten 89 mehrere radiale Bohrungen (in dem dargestellten Beispiel sind es 5), nach innen mit einer tangentialen Komponente ab. Diese Bohrungen die Zuleitungen 21, 22, 23, 24 ,25, welche an ihren Enden in die Düsenanordnung 15 ,16 ,17 ,18 ,19 münden bzw. in diese übergehen.

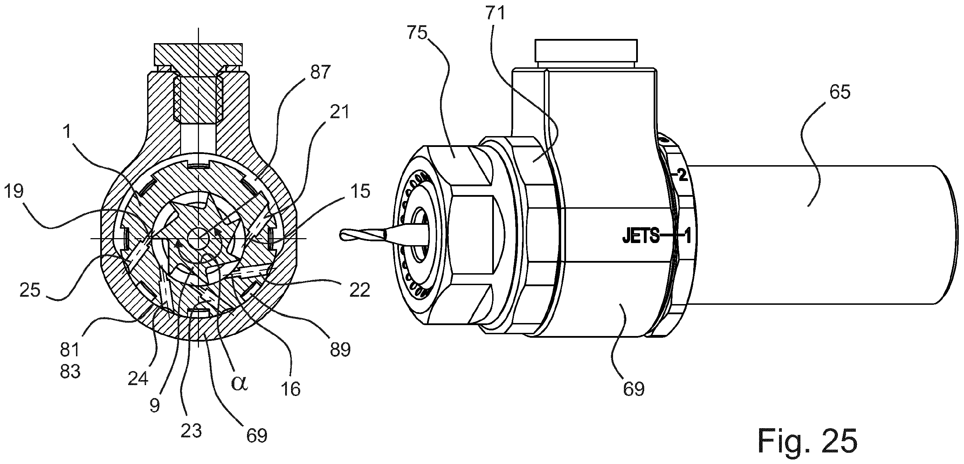

Aus der Zusammenschau der Figuren 23 und 25 lässt sich der Verlauf der Zuleitungen 21, 22, 23, 24, und 25 erkennen. Insgesamt gibt es bei diesem Ausführungsbeispiel fünf Zuleitungen, die über etwa den halben Umfang des Gehäuses 1 (entsprechend einem Mittelpunktswinkel alpha von etwas mehr als 180°) verteilt angeordnet sind.

Die Ausrichtung der Zuleitungen 21 bis 25 hat eine tangentiale Komponente. An jede der Zuleitungen schließt sich eine Düsenanordnung 15, 16, 17, 18, 19 an. Aus den Düsenanordnungen 15 bis 19 kann das Fluid mit hoher Geschwindigkeit austreten und einen tangentialen Impuls auf das Laufrad 9 ausüben und dieses in Drehung versetzen.

Die Verstellung des erfindungsgemäßen Wege-Ventils geschieht folgendermaßen: Durch Verdrehen des Stellrings 69 relativ zu dem Gehäuse 1 bzw. der Dichtfläche 81 wird die Zahl der geöffneten bzw. geschlossenen Zuleitungen 21, 22, 23, 24 und 25 eingestellt. Dementsprechend ändert sich auch der Volumenstrom des Fluids, das durch die Zuleitungen 21, 22, 23, 24, und 25 strömt und über die Düsenanordnungen 15, 16, 17, 18, 19 auf das Laufrad 9 aufprallt. Dort überträgt das Fluid einen Impuls mit einer tangentialen Richtungskomponente auf das Laufrad und versetzt es dadurch in Drehung. Das Drehmoment des Laufrads 9 hängt unter anderem vom Volumenstrom des auf das Laufrad 9 auftreffenden Fluids ab. Wenn also die Zahl der geöffneten Zuleitungen 21 bis 25 durch Verdrehen des Stellrings 69 verändert wird, dann ändert sich auch das Drehmoment, welches das Laufrad 9 auf die Spindel 3 und damit auch an die Werkzeugaufnahme 5 abgibt. Anders ausgedrückt: Durch Zuschalten von mehr oder weniger Zuleitungen und Düsen kann der Werkzeughalter an die Bearbeitung unterschiedlicher Werkstoffe und unterschiedlicher Werkzeuge mit verschiedenen Durchmessern auf einfachste Weise angepasst werden.

Das Drehmoment und die Drehzahl der Spindel 3 ist auch abhängig von der Geschwindigkeit mit der das Fluid auf das Laufrad 9 aufprallt.

In der Figur 24 ist der Stellring 69 etwas genauer dargestellt. Der Stellring 69 weist im Inneren eine Gegenfläche 83 auf. Diese Gegenfläche ist komplementär zu der Dichtfläche 81 im Gehäuse 1 ausgebildet. Die Gegenfläche 83 erstreckt sich nicht über den gesamten Umfang des Stellrings 69, sondern nur etwa über die Hälfte des Umfangs. An dem verbleibendenden Umfang ist eine Ausnehmung 85 ausgespart. Zwischen der Ausnehmung 85 und dem Gehäuse 1 des Werkzeughalters bildet sich im montierten Zustand ein ringförmiger Fluidraum 87, der bei diesem Ausführungsbeispiel einen Mittelspunktswinkel beta von ca. 180° einschließt.

Wenn man nun die Figuren 25, 26 und 27 betrachtet, kann man erkennen, dass die Gegenfläche 83 des Stellrings 69 mit der Dichtfläche 81 des Gehäuses 1 zusammenwirkt. Je nachdem welche der Stellungen "1" bis "5" der Stellring 69 einnimmt verschließt die Gegenfläche 83 eine oder mehrere der Zuleitungen 21 bis 25.

Im oberen Teil der Figur 22 b ist die Ausnehmung 85 vorhanden, so dass sich zwischen der Dichtfläche 81 des Gehäuses 1 und dem Stellring 69 der erwähnte ringförmige Fluidraum 87 ausbildet. Der Fluidraum 87 erstreckt sich nur etwa über einen Umfangswinkel von 180°. Er dient dazu, eine hydraulische Verbindung zwischen einer oder mehreren Versorgungsbohrungen 79 und einer oder mehrerer Zuleitungen 21 bis 25 zu schaffen. In der in Figur 22 b dargestellten Drehposition des Stellrings 69 wird die Zuleitung 21 über den Fluidraum 87 mit einer Versorgungsbohrung 79 hydraulisch verbunden.

Wenn diese hydraulische Verbindung vorhanden ist, dann versorgt die entsprechende Zuleitung 21 eine Düsenanordnung 15 mit Fluid, die über die Sacklochbohrung 77, die Versorgungsbohrung 79, den Verteilungsraum 86, den Fluidraum 87 in die Zuleitung 21 fließt.

In den Figuren 25, 26 und 27 sind drei verschiedene (von fünf möglichen) Schaltstellungen des erfindungsgemäßen Wegeventils dargestellt. In der Figur 25 ist der Stellring 69 relativ zu dem Gehäuse 1 so positioniert, dass der Fluidraum 87 über mehrere Versorgungsbohrungen 79 (nicht dargestellt) mit unter Druck stehendem Fluid versorgt wird. Über die Zuleitung 21 strömt das in den Fluidraum 87 strömende Fluid in Richtung der Düse 15, wird dort beschleunigt. Die Druckenergie des Fluids wird in kinetische Energie umgewandelt. Diese kinetische Energie trifft auf das Laufrad 9 und versetzt es in eine Drehung im Uhrzeigersinn. Die Zuleitungen 22 bis 25 sind in der in Figur 25 dargestellten Drehposition des Stellrings 69 von der Gegenfläche 83 des Stellrings 69 verschlossen, so dass sie nicht mit Fluid versorgt werden.

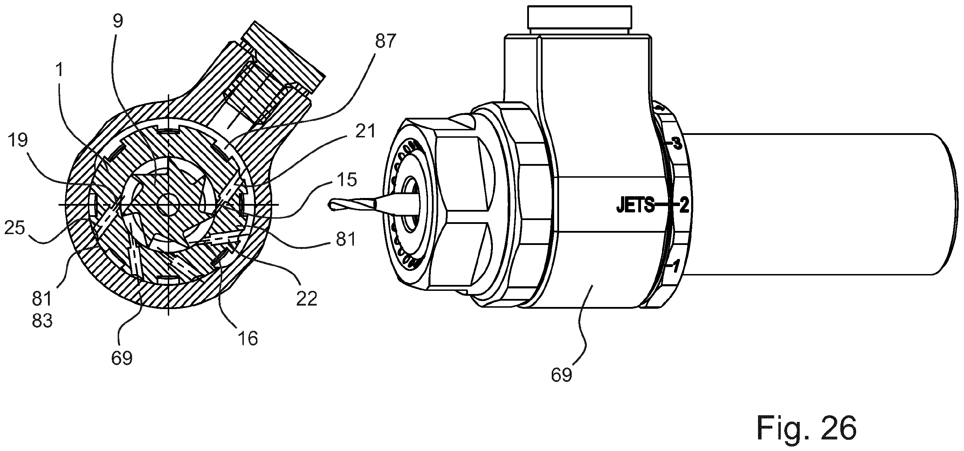

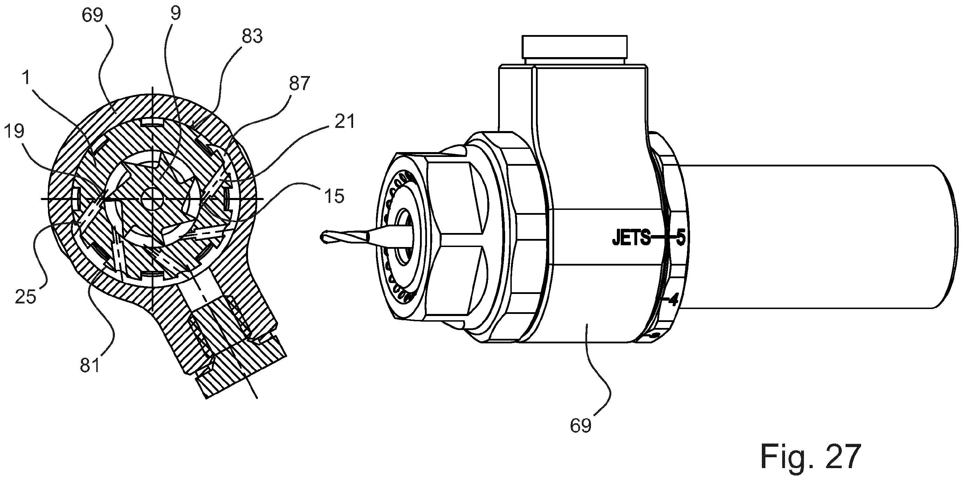

In der Figur 26 ist der Stellring 69 relativ zu dem Gehäuse 1 etwas weiter verdreht, so dass der Fluidraum 87 nun die Zuleitungen 21 und 22 mit unter Druck stehendem Fluid versorgt. Infolgedessen wird das Laufrad 9 mit der doppelten Fluidmenge beaufschlagt, so dass bei sonst gleichen Bedingungen das Drehmoment, welches das Laufrad 9 an die Spindel 3 abgibt, doppelt so groß ist. In der in Figur 27 gezeigten Schaltstellung werden alle fünf Zuleitungen 21 bis 25 über den Fluidraum mit unter Druck stehendem Fluid versorgt. Infolgedessen wird das Laufrad 9 mit der maximalen Fluidmenge beaufschlagt, die etwa 5-mal so groß ist wie in der Schaltstellung gemäß Figur 25.

### Bezugszeichenliste

1 Gehäuse
3 Spindel
5 Werkzeugaufnahme
7 Wälzlager
9, 11, 13 Laufrad
15, 16, 17, 18, 19 Düsenanordnung
21, 22, 23, 24, 25 Zuleitung
27 Revolver
29 Pumpe
31 Förderseite
33, 35, 37, 39 Wege-Ventil
41 Drossel
42 Schwungmasse
43, 45 Ableitung
47, 48, 49 Dichtung
51 Drehzahlsensor
53 Auswerteeinheit (mit optionalem Sender)
55 Empfänger
57 Werkzeughalter
58 Signalleitungen
59 Werkzeug
61 Werkstück
63 Antrieb des Revolvers
65 Schaft
67 Bund
69 Stellring
71 Mutter
73 Markierung
75 Abdeckung/Kappe
77 Sacklochbohrung
79 Versorgungsbohrung
81 Dichtfläche
83 Gegenfläche
85 Ausnehmung
86 Verteilungsraum
87 Fluidraum
alpha, β, γ Mittelpunktswinkel
89 Nuten
91 Fluidanschluss hinten
92 Fluidanschluss seitlich
93 Stopfen
95 zweiter Bund

## Patentansprüche

1. Angetriebener Werkzeughalter umfassend eine Spindel (3) mit einer Freistrahlturbine, wobei die Freistrahlturbine ein an der Spindel (3) angeordnetes Laufrad umfasst wobei die Freistrahlturbine zwei oder mehr Düsenanordnungen (15, 16, 17, 18, 19) aufweist, wobei jeder Düsenanordnung (15 bis 19) eine Zuleitung (21 bis 25) zur Versorgung mit Fluid zugeordnet ist, **dadurch gekennzeichnet, dass** die Zuleitungen (21, 22, 23, 24, 25) mit einem oder mehreren Wege-Ventilen (33, 35, 37, 39) geöffnet und/oder geschlossen werden, so dass die Düsenanordnungen (15 bis 19) einzeln oder gemeinsam mit unter Druck stehendem Fluid beaufschlagt werden.

2. Angetriebener Werkzeughalter umfassend eine Spindel (3) mit einer Freistrahlturbine, wobei die Freistrahlturbine eine Zuleitung (21), eine Düsenanordnung (15) und ein an der Spindel (3) angeordnetes Laufrad (9) umfasst, **dadurch gekennzeichnet, dass** der Werkzeughalter (57) ein Wegeventil (39) umfasst, dass das Wegeventil (3) zwei Ausgänge aufweist, die in die Zuleitung (21) münden, dass stromabwärts des Wegeventils (3) in mindestens einem der Ausgänge eine Drossel (41) vorgesehen ist, und dass die Ausgänge in die Zuleitung (21) münden, so dass die Düsenanordnung (15) mit unter Druck stehendem Fluid beaufschlagt wird.

3. Werkzeughalter nach Anspruch 1 oder 2, **dadurch gekennzeichnet, dass** an den Enden der Zuleitungen (21 bis 25) eine Düsenanordnung (15, 16, 17, 18, 19) mit jeweils einer oder mehreren Düsen ausgebildet ist.

4. Werkzeughalter nach einem der Ansprüche 1 oder 3, **dadurch gekennzeichnet, dass** das aus den mindestens zwei Zuleitungen (21, 22, 23, 24, 25) bzw. Düsenanordnungen (15, 16, 17, 18, 19) austretende Fluid die Spindel (3) in die gleiche Drehrichtung oder in entgegengesetzte Drehrichtungen antreibt.

5. Werkzeughalter nach einem der Ansprüche 1, 3 oder 4, **dadurch gekennzeichnet, dass** die Turbine zwei oder mehr Laufräder (9, 11, 13) aufweist, und dass jedem Laufrad (9, 11 ,13) mindestens eine Zuleitung (21, 22 23, 24, 25) bzw. mindestens eine Düsenanordnung (15, 16, 17, 18, 19) zugeordnet ist.

6. Werkzeughalter nach Anspruch 5, **dadurch gekennzeichnet, dass** die Laufräder (9, 11, 13) verschiedene Durchmesser haben.

7. Werkzeughalter nach einem der vorhergehenden Ansprüche, **dadurch gekennzeichnet, dass** das mindestens eine Wege-Ventile (39, 39.1 39.2), welches die Zuleitungen (21, 23, 25) öffnet oder schließt, in dem Werkzeughalter (57) angeordnet ist.

8. Werkzeughalter nach Anspruch 7 in Verbindung mit einem der Ansprüche 1 sowie 3 bis 6, **dadurch gekennzeichnet, dass** er zwei Zuleitungen (21, 23) aufweist, und dass in einer der Zuleitungen (21) eine steuerbare Drossel (41) vorgesehen ist.

9. Werkzeughalter nach einem der vorhergehenden Ansprüche, **dadurch gekennzeichnet, dass** die Werkzeugaufnahme (5) an einem ersten Ende der Spindel (3) angeordnet ist, und dass eines der Laufräder (13) an dem ersten Ende der Spindel und/oder an einem dem ersten Ende der Spindel (3) gegenüberliegenden zweiten Ende angeordnet ist.

10. Werkzeughalter nach einem der vorhergehenden Ansprüche, **dadurch gekennzeichnet, dass** das Wegeventil (39) einen ringförmigen Stellring (69) und eine mit dem Stellring (69) zusammenwirkende kreisringförmige oder kegelstumpfförmige Dichtfläche (81) in dem Gehäuse (1) aufweist, dass die Zuleitungen (21, 22, 23, 24, 25) über einen Umfangswinkel der Dichtfläche (81) verteilt sind, und dass der Stellring (69) in Abhängigkeit seiner Drehposition relativ zu dem Gehäuse (1) eine oder mehrere der Zuleitungen (21, 22, 23, 24, 25) freigibt oder verschließt.

11. Werkzeughalter nach Anspruch 10, **dadurch gekennzeichnet, dass** der Stellring (69) eine zu der Dichtfläche (81) komplementäre Gegenfläche (83) aufweist, dass die Gegenfläche (83) ein Kreisring oder ein Kegelstumpf mit einem Mittelpunktswinkel (alpha) kleiner 360° ist, und dass der Stellring (69) in Umfangsrichtung vor bzw. nach der Gegenfläche (83) eine Ausnehmung (85) aufweist.

12. Werkzeughalter nach Anspruch 11, **dadurch gekennzeichnet, dass** mindestens ein Fluidanschluss (91) an dem Stellring (69) ausgebildet ist, und/oder dass mindestens ein Fluidanschluss (92) an dem Gehäuse (1)) ausgebildet ist.

13. Werkzeughalter nach einem der vorhergehenden Ansprüche, **dadurch gekennzeichnet, dass** er eine Sensoranordnung (51) und/oder Auswerteeinheit (53) zur Erfassung der Drehzahl der Spindel (3) und/oder weiterer Betriebszustände des Werkzeughalters (57) umfasst.

14. Werkzeughalter nach Anspruch 13, **dadurch gekennzeichnet, dass** die Sensoranordnung (51) und/oder die Auswerteeinheit (53) drahtlos oder leitungsgebunden mit einer externen Steuereinheit verbunden ist.

15. Werkzeughalter nach Anspruch 13 oder 14, **dadurch gekennzeichnet, dass** die externe Steuereinheit das oder die Wege-Ventile (33, 35, 37, 39) und/oder eine Drossel (41) betätigt.

16. Werkzeughalter nach einem der Ansprüche 13 bis 15, **dadurch gekennzeichnet, dass** die von der Sensoranordnung (51) erfassten Sensordaten zur Steuerung der Wege-Ventile (33, 35, 37, 39) verwendet werden.

17. Werkzeughalter nach einem der Ansprüche 13 bis 16,
**dadurch gekennzeichnet, dass** die Verarbeitung der Sensordaten in der Auswerteeinheit (53) erfolgt und von dort die Wege-Ventile (33 bis 39) angesteuert werden.

18. Werkzeughalter nach einem der vorhergehenden Ansprüche, **dadurch gekennzeichnet, dass** zumindest ein Laufrad (9) für linksdrehenden und rechtsdrehenden Betrieb ausgelegt ist.

## Claims

1. Driven toolholder comprising a spindle (3) with a free jet turbine, wherein the free jet turbine comprises an impeller arranged on the spindle (3), wherein the free jet turbine has two or more nozzle arrangements (15, 16, 17, 18, 19), wherein each nozzle arrangement (15 to 19) is assigned a supply line (21 to 25) for the supply of fluid, **characterised in that** the supply lines (21, 22, 23, 24, 25) are opened and/or closed with one or more selector valves (33, 35, 37, 39) so that the nozzle arrangements (15 to 19) are individually or jointly fed with pressurised fluid.

2. Driven toolholder comprising a spindle (3) with a free jet turbine, wherein the free jet turbine comprises a supply line (21), a nozzle arrangement (15) and an impeller (9) arranged on the spindle (3), **characterised in that** the toolholder (57) comprises a selector valve (39), that the selector valve (3) has two outputs which flow into the supply line (21), that a choke (41) is provided in at least one of the outputs, downstream of the selector valve (3), and that the outputs flow into the supply line (21) so that the nozzle arrangement (15) is fed with pressurised fluid.

3. Toolholder according to claim 1 or 2, **characterised in that** a nozzle arrangement (15, 16, 17, 18, 19), in each case with one or more nozzles, is formed at the ends of the supply lines (21 to 25).

4. Toolholder according to one of the claims 1 or 3, **characterised in that** the fluid emerging from the at least two supply lines (21, 22, 23, 24, 25) or nozzle arrangements (15, 16, 17, 18, 19) drives the spindle (3) in the same direction of rotation or in opposite directions of rotation.

5. Toolholder according to one of the claims 1, 3 or 4, **characterised in that** the turbine has two or more impellers (9, 11, 13) and that each impeller (9, 11, 13) is assigned at least one supply line (21, 22, 23, 24, 25) or at least one nozzle arrangement (15, 16, 17, 18, 19).

6. Toolholder according to claim 5, **characterised in that** the impellers (9, 11, 13) have different diameters.

7. Toolholder according to one of the preceding claims, **characterised in that** the at least one selector valve (39, 39.1, 39.2) which opens or closes the supply lines (21, 23, 25) is arranged in the toolholder (57).

8. Toolholder according to claim 7 in conjunction with one of the claims 1 and 3 to 6, **characterised in that** it has two supply lines (21, 23) and that a controllable choke (41) is provided in one of the supply lines (21).

9. Toolholder according to one of the preceding claims, **characterised in that** the tool mounting (5) is arranged at a first end of the spindle (3) and that one of the impellers (13) is arranged at the first end of the spindle and/or at a second end opposite the first end of the spindle (3).

10. Toolholder according to one of the preceding claims, **characterised in that** the selector valve (39) has a ring-shaped adjusting ring (69) and a circular ring-shaped or truncated cone-shaped sealing surface (81) interacting with the adjusting ring (69) in the housing (1), that the supply lines (21, 22, 23, 24, 25) are distributed over a circumferential angle of the sealing surface (81), and that the adjusting ring (69) releases or closes one or more of the supply lines (21, 22, 23, 24, 25) depending on its rotation position relative to the housing (1).

11. Toolholder according to claim 10, **characterised in that** the adjusting ring (69) has a mating surface (83) complementary to the sealing surface (81), that the mating surface (83) is a circular ring or a truncated cone with a centre angle (alpha) of less than 360°, and that the adjusting ring (69) has a recess (85) before or after the mating surface (83) in the circumferential direction.

12. Toolholder according to claim 11, **characterised in that** at least one fluid connection (91) is formed on the adjusting ring (69) and/or that at least one fluid connection (92) is formed on the housing (1)).

13. Toolholder according to one of the preceding claims, **characterised in that** it comprises a sensor arrangement (51) and/or evaluation unit (53) for registering the speed of the spindle (3) and/or other operating states of the toolholder (57).

14. Toolholder according to claim 13, **characterised in that** the sensor arrangement (51) and/or the evaluation unit (53) is connected wirelessly or by cable to an external control unit.

15. Toolholder according to claim 13 or 14, **characterised in that** the external control unit actuates the selector valve(s) (33, 35, 37, 39) and/or a choke (41).

16. Toolholder according to one of the claims 13 to 15, **characterised in that** the sensor data collected by the sensor arrangement (51) are used to control the selector valves (33, 35, 37, 39).

17. Toolholder according to one of the claims 13 to 16, **characterised in that** the processing of the sensor data takes place in the evaluation unit (53) and the selector valves (33 to 39) are controlled from there.

18. Toolholder according to one of the preceding claims, **characterised in that** at least one impeller (9) is designed for left-handed and right-handed operation.

## Revendications

1. Porte-outil entraîné comprenant une broche (3) avec une turbine à jet libre, dans lequel la turbine à jet libre comprend une roue à aubes agencée sur la broche (3), dans lequel la turbine à jet libre présente deux agencements de buse (15, 16, 17, 18, 19) ou plus, dans lequel une conduite d'alimentation (21 à 25) pour une alimentation en fluide est associée à chaque agencement de buse (15 à 19), **caractérisé en ce que** les conduites d'alimentation (21, 22, 23, 24, 25) sont ouvertes et/ou fermées avec une ou plusieurs vannes directionnelles (33, 35, 37, 39), de sorte que les agencements de buse (15 à 19) sont alimentés individuellement ou conjointement avec du fluide sous pression.

2. Porte-outil entraîné comprenant une broche (3) avec une turbine à jet libre, dans lequel la turbine à jet libre comprend une conduite d'alimentation (21), un agencement de buse (15) et une roue à aubes (9) agencée sur la broche (3), **caractérisé en ce que** le porte-outil (57) comprend une vanne directionnelle (39), **en ce que** la vanne directionnelle (3) présente deux sorties qui débouchent dans la conduite d'alimentation (21), **en ce qu'**un étranglement (41) est prévu dans au moins l'une des sorties en aval de la vanne directionnelle (3), et **en ce que** les sorties débouchent dans la conduite d'alimentation (21), de sorte que l'agencement de buse (15) est alimenté en fluide sous pression.

3. Porte-outil selon la revendication 1 ou 2, **caractérisé en ce qu'**un agencement de buses (15, 16, 17, 18, 19) avec respectivement une ou plusieurs buses est réalisé aux extrémités des conduites d'alimentation (21 à 25).

4. Porte-outil selon l'une quelconque des revendications 1 ou 3, **caractérisé en ce que** le fluide sortant des au moins deux conduites d'alimentation (21, 22, 23, 24, 25) ou agencements de buses (15, 16, 17, 18, 19) entraîne la broche (3) dans la même direction de rotation ou dans des directions de rotation opposées.

5. Porte-outil selon l'une quelconque des revendications 1, 3 ou 4, **caractérisé en ce que** la turbine présente deux roues à aubes (9, 11, 13) ou plus, et **en ce qu'**au moins une conduite d'alimentation (21, 22 23, 24, 25) ou au moins un agencement de buses (15, 16, 17, 18, 19) est associé(e) à chaque roue à aubes (9, 11, 13).

6. Porte-outil selon la revendication 5, **caractérisé en ce que** les roues à aubes (9, 11, 13) présentent des diamètres différents.

7. Porte-outil selon l'une quelconque des revendications précédentes, **caractérisé en ce que** la au moins une vanne directionnelle (39, 39.1, 39.2), qui ouvre ou ferme les conduites d'alimentation (21, 23, 25), est agencée dans le porte-outil (57).

8. Porte-outil selon la revendication 7 lorsqu'elle dépend de l'une quelconque des revendications 1 et 3 à 6, **caractérisé en ce qu'**il présente deux conduites d'alimentation (21, 23) et **en ce qu'**un étranglement (41) pouvant être commandé est prévu dans l'une des conduites d'alimentation (21).

9. Porte-outil selon l'une quelconque des revendications précédentes, **caractérisé en ce que** le logement d'outil (5) est agencé à une première extrémité de la broche (3), et **en ce que** l'une des roues à aubes (13) est agencée à la première extrémité de la broche et/ou à une seconde extrémité opposée à la première extrémité de la broche (3).

10. Porte-outil selon l'une quelconque des revendications précédentes, **caractérisé en ce que** la vanne directionnelle (39) présente une bague de réglage (69) annulaire et une surface d'étanchéité (81) annulaire ou tronconique coopérant avec la bague de réglage (69) dans le boîtier (1), **en ce que** les conduites d'alimentation (21, 22, 23, 24, 25) sont réparties sur un angle périphérique de la surface d'étanchéité (81), et **en ce que** la bague de réglage (69) libère ou ferme une ou plusieurs des conduites d'alimentation (21, 22, 23, 24, 25) en fonction de sa position de rotation par rapport au boîtier (1).

11. Porte-outil selon la revendication 10, **caractérisé en ce que** la bague de réglage (69) présente une contre-surface (83) complémentaire de la surface d'étanchéité (81), **en ce que** la contre-surface (83) est une bague circulaire ou un tronc de cône avec un angle au centre (alpha) inférieur à 360°, et **en ce que** la bague de réglage (69) présente un évidement (85) dans la direction circonférentielle avant ou après la contre-surface (83).

12. Porte-outil selon la revendication 11, **caractérisé en ce qu'**au moins un raccord de fluide (91) est réalisé au niveau de la bague de réglage (69) et/ou **en ce qu'**au moins un raccord de fluide (92) est réalisé au niveau du boîtier (1).

13. Porte-outil selon l'une quelconque des revendications précédentes, **caractérisé en ce qu'**il comprend un système de capteur (51) et/ou une unité d'évaluation (53) pour détecter la vitesse de rotation de la broche (3) et/ou des états de fonctionnement supplémentaires du porte-outil (57).

14. Porte-outil selon la revendication 13, **caractérisé en ce que** l'agencement de capteur (51) et/ou l'unité d'évaluation (53) est relié(e) sans fil ou par câble à une unité de commande externe.

15. Porte-outil selon la revendication 13 ou 14, **caractérisé en ce que** l'unité de commande externe actionne la ou les vannes directionnelles (33, 35, 37, 39) et/ou un étranglement (41).

16. Porte-outil selon l'une des revendications 13 à 15, **caractérisé en ce que** les données de capteur détectées par le système de capteur (51) sont utilisées pour la commande des vannes directionnelles (33, 35, 37, 39).

17. Porte-outil selon l'une quelconque des revendications 13 à 16, **caractérisé en ce que** le traitement des données de capteur a lieu dans l'unité d'évaluation (53) et à partir de là, les vannes directionnelles (33 à 39) sont commandées.

18. Porte-outil selon l'une quelconque des revendications précédentes, **caractérisé en ce qu'**au moins une roue à aubes (9) est conçue pour un fonctionnement en rotation à gauche et à droite.
